# EUROPEAN PATENT SPECIFICATION

(11) **EP 4 228 177 B1**
(45) Date of publication and mention of the grant of the patent: **22.04.2026**
(21) Application number: 21884482.7
(22) Date of filing: 06.07.2021
(51) Int. Cl.: H04L 45/76, G06F 9/455

(54) **FLOW TABLE PROCESSING METHOD AND RELATED DEVICE**
FLUSSTABELLENVERARBEITUNGSVERFAHREN UND ZUGEHÖRIGE VORRICHTUNG
PROCÉDÉ DE TRAITEMENT DE TABLE DE FLUX ET DISPOSITIF ASSOCIÉ

(30) Priority: 31.10.2020 CN 202011206451
(43) Date of publication of application: 16.08.2023
(73) Proprietor: Huawei Technologies Co., Ltd., Shenzhen, Guangdong 518129 (CN)
(72) Inventor: LI, Lijun, Shenzhen, Guangdong 518129 (CN); ZHOU, Jingbin, Shenzhen, Guangdong 518129 (CN); LI, Xiao, Shenzhen, Guangdong 518129 (CN)
(74) Representative: Körber, Martin Hans
(86) International application number: PCT/CN2021/104663
(87) International publication number: WO 2022/088743

(56) References cited:
- EP-A1- 3 236 623
- CN-A- 103 634 225
- CN-A- 105 245 456
- CN-A- 109 768 871
- US-A1- 2019 052 480
- LE YANFANG YANFANG@CS WISC EDU ET AL: "UNO uniflying host and smart NIC offload for flexible packet processing", PROCEEDINGS OF THE 2022 ACM WORKSHOP ON SOFTWARE SUPPLY CHAIN OFFENSIVE RESEARCH AND ECOSYSTEM DEFENSES, ACMPUB27, NEW YORK, NY, USA, 24 September 2017 (2017-09-24), pages 506 - 519, XP058968655, ISBN: 978-1-4503-9889-3, DOI: 10.1145/3127479.3132252

## Description

### TECHNICAL FIELD

The present invention relates to the field of communication technologies, and in particular, to a flow table processing method and a related device.

### BACKGROUND

In a conventional data center, a server, a physical machine, or a host runs an operating system. The physical machine is connected to a physical switch, and the physical switch forwards data between different hosts. After computing is virtualized, a host is virtualized into a plurality of Virtual Machine(VM). Virtual machines on one host forward data by using a Virtual Switch (VSw).

Hardware resources of each physical machine need to support running of at least a plurality of virtual machines and a virtual switch. Hardware resources of each physical machine are limited. If a virtual switch for performing a data exchange task occupies extremely many hardware resources, running of a virtual machine on the physical machine is likely to be affected, reducing operation efficiency and reducing reliability of the physical machine. This may cause disadvantages such as a low processing speed, and may even cause a system failure due to heavy load of the physical machine.

To occupy fewer hardware resources of a physical machine, virtual switches have gradually undergone three stages: kernel-mode soft switching, user-mode soft switching, and hardware offloading switching. Currently, the hardware offloading switching technology is gradually used by mainstream manufacturers. In the hardware offloading switching technology, some I/O services on a host are offloaded to low-cost heterogeneous hardware for execution. This can release Central Processing Unit ( CPU) resources on the host, and improve running efficiency of a CPU. For example, to further increase a packet processing speed and release CPU resources, a flow table matching operation may be offloaded to hardware, and then the flow table matching operation originally performed on the host is offloaded to the hardware for implementation. The heterogeneous hardware to which the Input/Output ( I/O) services are offloaded includes a network interface card, which may also be referred to as an offloading card. However, the hardware offloading switching technology has a problem about reliability across network interface cards, to be specific, can implement only reliability of different links on a single network interface card. If the network interface card fails, an entire system fails, and therefore a risk of a single point of failure exists.

EP 3236623 A1 provide a method, device and system for link management in a VM environment.

### SUMMARY

Embodiments of the present invention provide a flow table processing method and a related device, to resolve a problem about reliability across network interface cards in a hardware offloading switching technology. The application is set out in the appended set of claims.

In the conventional technology, only an exact match flow table offloading solution based on a virtual switch and a single network interface card is available, and therefore a risk of a single point of failure exists. However, effective packet processing cannot be implemented even if the virtual switch is connected to a plurality of network interface cards based on the conventional technology. If the virtual switch is connected to a plurality of network interface cards based on the conventional technology, because different network interface cards correspond to different logical port identifiers and the different logical port identifiers mean that the plurality of network interface cards correspond to a plurality of different logical links, data loopback may occur between a physical switch and the virtual switch based on the plurality of different logical links corresponding to the plurality of network interface cards. For example, when a first network interface card of the plurality of network interface cards receives a broadcast packet (for example, an Address Resolution Protocol (ARP) packet) that can be processed only based on the virtual switch, the packet may be sent by a virtual machine to the first network interface card, or may be sent by another physical machine to the first network interface card by using the physical switch. This type of packet has no 5-tuple. Therefore, an exact match flow table corresponding to the packet cannot be offloaded to a network interface card, and the packet needs to be broadcast based on the virtual switch. Therefore, after receiving the ARP packet, the first network interface card sends the ARP packet to the virtual switch. If the ARP packet is sent by another physical machine to the first network interface card by using the physical switch, after the first network interface card sends the ARP packet to the virtual switch through a logical link corresponding to the first network interface card, because the first network interface card and a second network interface card of the plurality of network interface cards correspond to different logical links, the virtual switch re-broadcasts the ARP packet to the physical switch through a logical link corresponding to the second network interface card. In this case, the ARP packet causes data loopback between the virtual switch and the physical switch. If the packet is sent by another virtual machine to the first network interface card, after the first network interface card sends the ARP packet to the virtual switch through a logical link corresponding to the first network interface card, the virtual switch broadcasts the packet to the physical switch through a logical link corresponding to a second network interface card. After receiving the ARP packet, the physical switch re-broadcasts the packet to the virtual switch through the logical link corresponding to the first network interface card. In this case, the ARP packet also causes data loopback between the virtual switch and the physical switch. The data loopback between the physical switch and the virtual switch affects system performance and even causes a packet processing exception.

In this embodiment of the present invention, physical ports in each network interface card are aggregated into a logical port based on the link aggregation control protocol LACP, so as to form first-level bonding; and then the virtual switch establishes the mapping relationship between the N port identifiers of the N logical ports and the target port identifier, to set the N logical ports corresponding to the N network interface cards to correspond to one target port identifier, so as to form second-level bonding. In this embodiment of the present invention, the first port is formed through the foregoing two levels of bonding, thereby avoiding data loopback between a physical switch and the virtual switch that may be caused when the N logical ports respectively correspond to different port identifiers. In this embodiment of the present invention, the N port identifiers of the N logical ports correspond to a same target port identifier. Therefore, from a perspective of a switch, the N network interface cards correspond to one logical link, thereby avoiding data loopback between the physical switch and the virtual switch that is caused by different logical links during processing of a packet similar to an ARP packet. In addition, in this embodiment of the present invention, the exact match flow table can be offloaded to a plurality of network interface cards through the first port formed through the foregoing two levels of bonding. To be specific, when determining that the exact match flow table meets an offloading condition, the virtual switch may offload the exact match flow table to all the network interface cards through the first port, thereby resolving a problem that a service is terminated due to a failure of a single network interface card in a process of offloading the exact match flow table to the single network interface card or processing a packet based on the single network interface card. The virtual switch offloads the exact match flow table to all network interface cards connected to a host, so that the virtual switch can switch to another network interface card when any network interface card fails, thereby ensuring reliability of a packet processing service.

### BRIEF DESCRIPTION OF DRAWINGS

To describe technical solutions in embodiments of the present invention or in the background more clearly, the following describes accompanying drawings that need to be used in embodiments of the present invention or in the background.
FIG. 1 is a schematic diagram of a principle of a virtual switch according to an embodiment of the present invention;
FIG. 2 is a diagram of a system architecture of an openflow virtual switch offloading solution according to an embodiment of the present invention;
FIG. 3 is a diagram of a system architecture of an elastic virtual switch according to an embodiment of the present invention;
FIG. 4 is a diagram of a system architecture of a single-root input/output virtualization bonding solution according to an embodiment of the present invention;
FIG. 5 is a schematic diagram of a server architecture according to an embodiment of the present invention;
FIG. 6 is a schematic diagram of a structure of a physical machine according to an embodiment of the present invention;
FIG. 7A and FIG. 7B are a schematic flowchart of a flow table processing method according to an embodiment of the present invention;
FIG. 8 is a schematic flowchart of a flow table processing method according to an embodiment of the present invention;
FIG. 9 is a schematic flowchart of a flow table processing method according to an embodiment of the present invention;
FIG. 10 is a schematic flowchart of a flow table processing method according to an embodiment of the present invention;
FIG. 11 is a schematic flowchart of a flow table processing method according to an embodiment of the present invention;
FIG. 12 is a schematic diagram of a structure of a flow table processing apparatus according to an embodiment of the present invention; and
FIG. 13 is a schematic diagram of a structure of another physical machine according to an embodiment of the present invention.

### DESCRIPTION OF EMBODIMENTS

The following describes embodiments of the present invention with reference to accompanying drawings in embodiments of the present invention.

In the specification, claims, and accompanying drawings of this application, the terms "first", "second", "third", "fourth", and the like are intended to distinguish between different objects but do not indicate a particular order. In addition, the terms "comprise", "include", and any variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification means that a specific feature, structure, or characteristic described with reference to the embodiment may be included in at least one embodiment of this application. The phrase appearing in various locations in this specification does not necessarily mean a same embodiment, and neither means an independent or alternative embodiment mutually exclusive with another embodiment. It is explicitly and implicitly understood by persons skilled in the art that embodiments described in this specification may be combined with another embodiment.

Terms such as "component", "module", and "system" used in this specification indicate computer-related entities, hardware, firmware, combinations of hardware and software, software, or software being executed. For example, a component may be but is not limited to a process that runs on a processor, a processor, an object, an executable file, an execution thread, a program, and/or a computer. As illustrated by using figures, both a computing device and an application that runs on the computing device may be components. One or more components may reside in a process and/or an execution thread, and a component may be located on one computer and/or distributed between two or more computers. In addition, these components may be executed from various computer-readable media that store various data structures. For example, the components may perform communication by using a local process and/or a remote process and based on, for example, a signal with one or more data packets (for example, data from two components interacting with another component in a local system, a distributed system, and/or across a network such as the Internet interacting with other systems by using the signal).

First, a technical problem to be specifically resolved in this application is analyzed and proposed. First, an actual application scenario corresponding to the technical problem to be resolved in embodiments of this application needs to be described and analyzed.

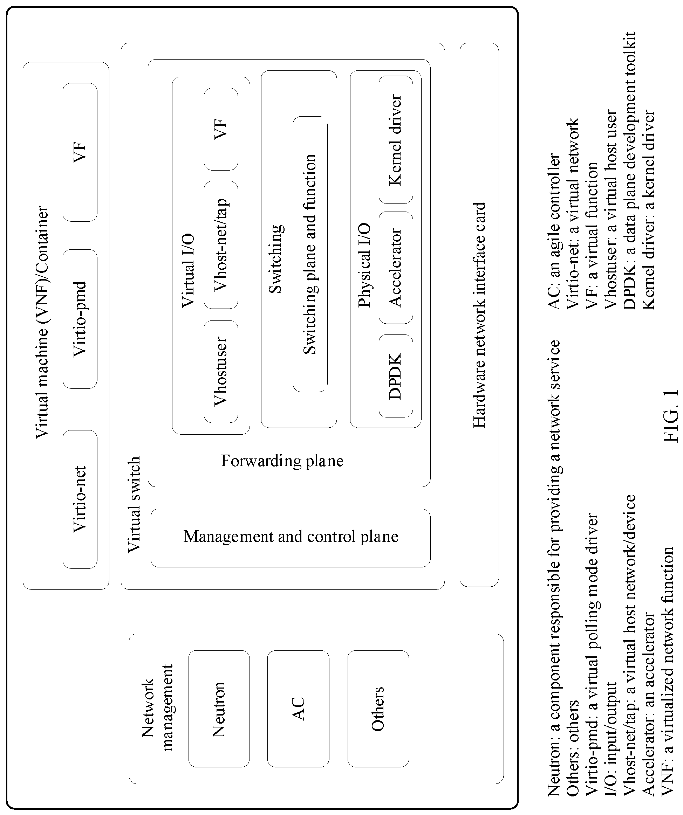

This application relates to the field of cloud computing network virtualization technologies for computers. The most important component in network virtualization is a Virtual Switch ( vSw). The virtual switch runs on a (Host), and provides network communication traffic exchange for a virtual machine or a container. FIG. 1 is a schematic diagram of a principle of a virtual switch. As shown in FIG. 1, the virtual switch includes a management and control plane and a forwarding plane in terms of an architecture, where the forwarding plane includes three parts: virtual Input/Output ( I/O), a switching plane, and physical I/O. Specifically, the virtual switch is configured and managed by a neutron, an Agile Controller (AC), or the like, and creates an object such as a virtual network interface card or a physical network interface card, and delivers a configuration of the object. A virtual machine or a container cooperates with a virtual I/O backend of the virtual switch through a frontend virtual network interface card driver, to send or receive a packet.

Development of virtual switches has gradually undergone three stages: kernel-mode soft switching, user-mode soft switching, and hardware offloading switching. In the kernel-mode soft switching and user-mode soft switching stages, a data flow enters a virtual switch through a network interface card. When a packet of a new data flow enters the virtual switch for the first time, the virtual switch analyzes the packet of the data flow, determines how to process the packet, and finally records a processing process of the packet and generates a related exact match flow table. When a subsequent packet of the data flow enters the virtual switch, the virtual switch finds, through matching, a corresponding exact match flow table based on information of the packet, and then directly performs an action indicated in the exact match flow table to process the packet, for example, encapsulate or decapsulate the packet and then forward the packet to another device through a network interface card. However, a flow table matching process and a process of performing the action in the flow table directly affect packet processing performance of the virtual switch. To improve packet processing efficiency, in the hardware offloading switching stage, a virtual switch offloads an exact match flow table to a network interface card. When a packet passes through the network interface card, the network interface card directly finds, through matching, a corresponding offloaded flow table based on information of the packet, and then performs corresponding processing on the packet based on a matched offloaded flow table entry, without forwarding the packet to the virtual switch, thereby improving packet processing efficiency. The hardware offloading switching technology is gradually used by mainstream manufacturers. This method has many advantages, for example, provides high performance while ensuring abundant functions. However, the hardware offloading switching technology has a problem about reliability across network interface cards due to a complex software and hardware collaboration mechanism, and can implement only reliability of different links on a single network interface card. If the single network interface card fails, an entire system fails, and therefore a risk of a single point of failure exists.

Currently, the following three solutions based on the hardware offloading switching technology are mainly available on the market, and are separately described below.

### Conventional Technology 1

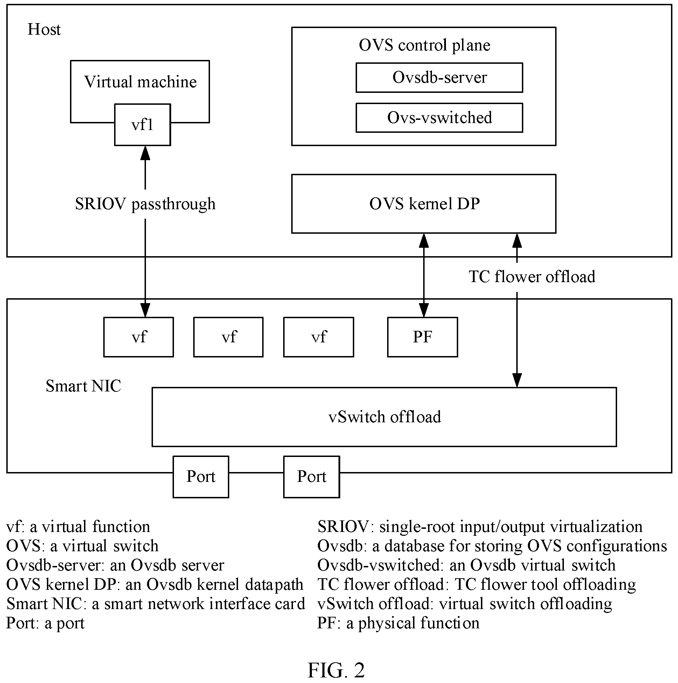

FIG. 2 is a diagram of a system architecture of an Openflow Virtual Switch(OVS) offloading solution. As shown in FIG. 2, the system architecture includes a host and a Smart Network Interface Card(Smart NIC). A virtual machine and an OVS run on the host. The OVS includes a user space and a kernel space. The user space includes an OVS control plane, and the OVS control plane further includes an Ovsdb-server process and an Ovsdb-vswitch process. The kernel space includes an OVS kernel datapath (DP) forwarding database. The smart NIC, which is a hardware module, also includes an Embedded Virtual Switch( eVS), and the embedded virtual switch includes a virtual switch offloading module.

The OVS control plane is responsible for managing a database, learning a slow-path rule, performing matching against an openflow slow-path flow table rule, and generating and managing an exact match flow table. If the vSwitch offloading or the OVS kernel DP does not find an offloaded flow table or an exact match flow table during matching, the OVS control plane needs to assist in processing.

The OVS kernel DP is responsible for searching for an exact match flow table in the kernel space and forwarding the exact match flow table. When hardware offloading is enabled, the OVS kernel DP cooperates with the OVS control plane to generate and offload an exact match flow table by using a TC flower tool provided by a Linux kernel. The vSwitch offloading module runs in the network interface card to provide fast-path forwarding for a virtual machine. Specifically, the OVS delivers a default rule to the embedded switch during initialization. When the first packet of a data flow reaches the embedded switch, if the packet does not match any other rule, the packet matches the default rule. An action corresponding to the default rule is to send the packet to a management host of the embedded switch, namely, the OVS kernel datapath forwarding database in the kernel space. If the packet is a first packet of the data flow, the OVS kernel datapath forwarding database does not have forwarding information, and does not know how to perform forwarding. Then the OVS kernel datapath forwarding database queries an ovs-vswitchd process in the user space. Because the ovs-vswitchd process stores an openflow rule, the ovs-vswitchd process may perform an action matching operation according to the openflow rule, that is, find, from a plurality of openflow rules through matching, a rule corresponding to the packet, and implement forwarding based on an action in the rule. In addition, the ovs-vswitchd process determines whether the rule corresponding to the current data flow can be offloaded (offload) to the network interface card. If the rule can be offloaded to the network interface card, the ovs-vswitchd process invokes a TC interface to offload the openflow rule to hardware. In this way, a subsequent packet of the same data flow can be directly forwarded in the embedded virtual switch of the network interface card, without entering an operating system of the host.

In the openflow virtual switch offloading solution shown in FIG. 2, a hardware offloading and forwarding function can be effectively implemented, thereby avoiding impact on network performance (a throughput, a delay, and packet forwarding performance (Packet Per Second, PPS)) that is caused by forwarding implemented by the OVS kernel datapath forwarding database in the kernel space of the operating system. However, in the conventional technology, only one offloading network interface card can be used, and only link-level reliability can be provided, without providing reliability assurance for a plurality of network interface cards. If the network interface card fails, the entire system fails, and therefore a risk of a single point of failure exists.

### Conventional Technology 2

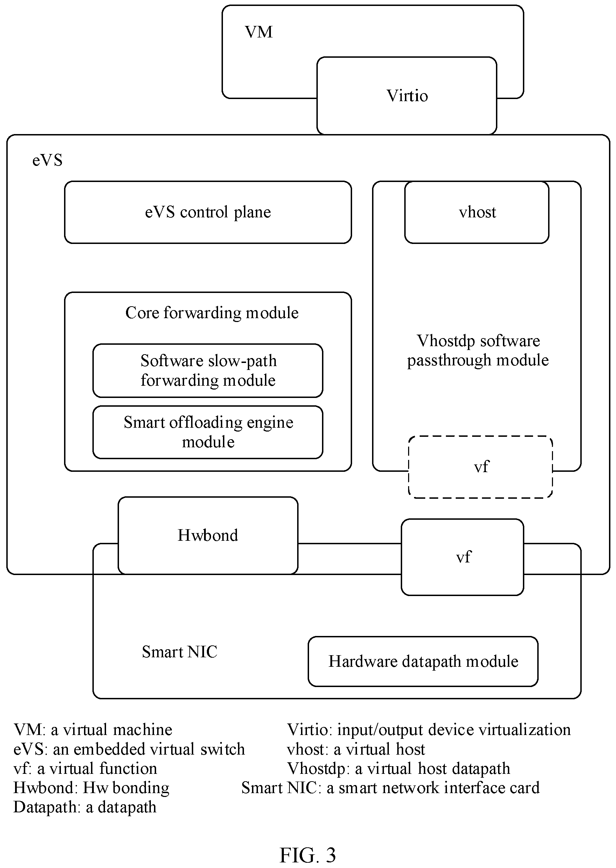

FIG. 3 is a diagram of a system architecture of an elastic virtual switch (Elastic Virtual Switch, eVS). The eVS is a virtual switch extended and modified based on an open-source OVS. As shown in FIG. 3, the system architecture includes a host (host) and a smart NIC. A virtual machine and the elastic virtual switch run on the host. The eVS includes an eVS control plane, a core forwarding module, and a Vhostdp software passthrough module. The core forwarding module includes a software slow-path forwarding module and a smart offloading engine module. The smart NIC includes a datapath module.

The eVS control plane is responsible for managing a database, performing matching against an openflow slow-path flow table rule, and generating and managing an exact match flow table, and further provides functions such as security rule check. The software slow-path forwarding module is integrated with a forwarding engine, and cooperates with the hardware offloading engine module to combine and normalize a plurality of table lookups and action execution results on a forwarding path to form a hardware offloaded flow table for single matching and single execution, so that the hardware offloaded flow table can be more easily executed in a smart network interface card. When a virtual network interface card of the virtual machine is configured into a para-virtualization virtio mode (or a software passthrough mode), the Vhostdp software passthrough module is responsible for transferring I/O packets between the network interface card and the virtual network interface card. The datapath module in the smart network interface card runs in a hardware network interface card, and provides fast-path forwarding for the virtual machine by using an offloaded flow table delivered by the elastic virtual switch.

In the elastic virtual switch shown in FIG. 3, a hardware offloading and forwarding function can be effectively implemented, thereby resolving a performance problem. However, only one hardware offloading network interface card can be used, and a bonding technology can provide only link-level reliability, and cannot provide reliability assurance for a plurality of network interface cards.

### Conventional Technology 3

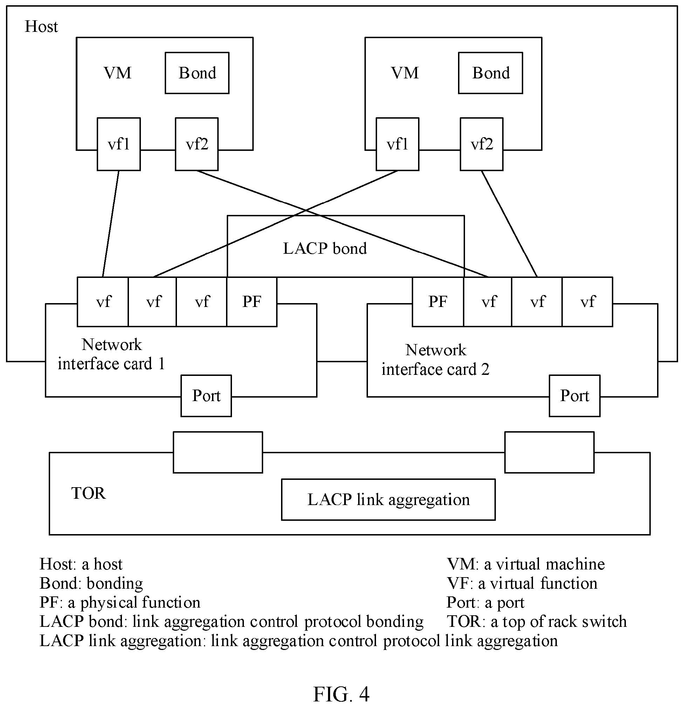

FIG. 4 is a diagram of a system architecture of a single-root input/output virtualization ( SR-I/OV) bonding solution. In the system, a Linux bonding component is introduced based on SR-I/OV virtualization, and LACP bonding of a PF is used to control an operation mode of virtual function bonding in a virtual machine.

The SR-I/OV function is enabled on two network interface cards. The two network interface cards each provide a virtual function for each of two virtual machines. Physical functions PFs of the two network interface cards constitute bonding in an LACP mode on a host, and an LACP aggregation negotiation function is enabled on a TOR side. Two virtual functions that are in a virtual machine and that are provided by the two network interface cards constitute bonding in a load balancing mode (non-LACP), and a virtual function is selected based on a configured hash algorithm to send and receive traffic. When an LACP bonding aggregation status of the host changes, the functions and the bonding in the virtual machines are notified by using a link control mechanism of the hardware network interface card, to trigger link switchover.

As shown in FIG. 4, in the SR-I/OV bonding solution, a problem about reliability across network interface cards can be resolved, and performance can also be improved. However, in the SR-I/OV mode, a network interface card can provide only simple layer-2 MAC+VLAN-based forwarding. Because no virtual switch learns a software slow-path rule for a packet, hardware offloading for a virtual switch is not supported. Therefore, abundant service function requirements of a cloud computing platform cannot be supported.

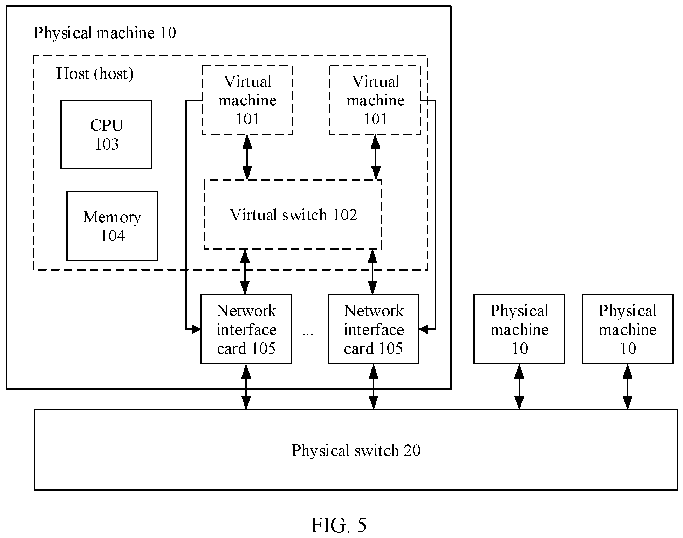

Based on the technical problems proposed above and corresponding application scenarios in this application, for ease of understanding of embodiments of the present invention, the following first describes a server architecture on which embodiments of the present invention are based. FIG. 5 is a schematic diagram of a server architecture according to an embodiment of the present invention. As shown in FIG. 5, the server architecture includes at least one physical machine (or referred to as a computer device, a physical host, or a physical computer) 10 and a physical switch 20. A plurality of physical machines 10 are connected to each other through the physical switch 20 and then connected to an external network, to communicate with an external environment.

Each physical machine 10 has a complete software environment and a complete hardware environment. The hardware environment of the physical machine includes at least a host and a network interface card (or referred to as a network adapter, a physical network adapter, or a physical network interface card(NIC) 105. A part of the physical machine other than the network interface card is referred to as the host. Optionally, the host includes a CPU 103 and a memory 104. The software environment of the physical machine includes at least a virtual switch 102 and at least one virtual machine 101, that is, the virtual switch 102 and the at least one virtual machine 101 run on the host of the physical machine 10. Optionally, the software environment of the physical machine further includes a virtual machine monitor (VMM) (not shown in the figure). The virtual machine monitor is also referred to as a virtual machine manager or a hypervisor, and is configured to manage the one or more virtual machines 101.

One or more virtual machines may be obtained through simulation on one physical machine by using a virtualization technology. The virtual machine can operate like a physical machine. For example, a user may install an operating system and an application program on the virtual machine. For another example, the user may access a network resource by using the virtual machine. For the user, the virtual machine may be considered as an application program running on a physical machine. However, for an application program running on the virtual machine, the virtual machine provides an operation environment for the application program like a real physical machine. The virtual machine includes a user mode and a kernel mode, which are two running levels of the operating system. The user initiates various instructions in the user mode, and the instructions initiated by the user are generated in the user mode of the virtual machine and are delivered to the kernel mode of the virtual machine. The one or more virtual machines obtained through simulation on the physical machine need to share a network interface card to communicate with external resources, and the virtual machines also need to communicate with each other. A virtual switch can implement communication between different virtual machines on one host.

The network interface card in this embodiment of this application is a network interface card supporting a Single-root Input/Output Virtualization(SR-I/OV) function. The SR-I/OV technology allows a plurality of virtual machines to efficiently share a peripheral component interconnect express (PCIe) device (for example, the network interface card). Concepts of a physical function (PF) and a virtual function (VF) are introduced in the SR-I/OV to support virtualization of the network interface card. The PF is a peripheral component interconnect (PCI) function supported by the network interface card, and a plurality of virtual functions may be extended from the PF. The virtual function is a "network interface card" or an instance obtained by virtualizing the network interface card that supports the SR-I/OV. The virtual function is presented in a form of an independent network interface card. Each virtual function has an exclusive PCI configuration area. Each virtual function in the network interface card is configured with a bandwidth resource for data transmission. Each virtual function is allocated by the virtual machine monitor to a virtual machine running on the host device. The network interface card also provides an internal virtual switch function, and can provide a bandwidth limiting function by using the physical function or the virtual function. A user (or an administrator) may allocate bandwidth to each virtual function based on the bandwidth limiting function. One virtual function corresponds to one virtual network interface card (virtual network interface card, vNIC) of one virtual machine. After the SR-I/OV is enabled on the network interface card, the network interface card exchanges data with a virtual function driver VF driver of the virtual machine by using the virtual function. By using the SR-I/OV technology, a single network interface card is virtualized into a plurality of virtual function interfaces. Each virtual function interface has an independent virtual PCIe channel, and these virtual PCIe channels share a PCIe channel of the network interface card. Each virtual machine may occupy one or more virtual function interfaces. In this way, the virtual machine can directly access its own virtual function interface without coordination or intervention of the virtual machine monitor, thereby greatly improving network throughput performance. In this embodiment of this application, the SR-I/OV technology supporting a direct connection between a network interface card and a virtual machine is used as an example. In actual use, another technology supporting a direct connection between a network interface card and a virtual machine may alternatively be used.

The network interface card in this embodiment of this application is not limited to a commercial network interface card chip. To be specific, the network interface card in this embodiment of this application may include a programmable device such as an Network Processor ( NP) or an Field-Programmable Gate Array ( FPGA), and a commercial network interface card chip. Specifically, all chips or devices that can implement a function of a network interface card may serve as the network interface card in this embodiment of this application, and fall within the protection scope of this application.

In this embodiment of this application, the virtual machine 101 is connected to the network interface card 105, or the virtual machine 101 is connected to the network interface card 105 through the virtual switch, so as to communicate with an external environment. When a virtual network interface card of the virtual machine 101 is configured to be in a hardware passthrough mode, the virtual machine 101 is directly connected to the network interface card 105. When the virtual network interface card of the virtual machine 101 is configured to be in a software passthrough mode, the virtual machine 101 is connected to the network interface card 105 through the virtual switch. Any physical machine 10 in this embodiment of this application may serve as a physical machine in this application to implement a flow table processing method provided in embodiments of this application. In this embodiment of this application, all virtual machines may be connected to the network interface card and the virtual switch. Actually, alternatively, only some virtual machines (an operation mode of a virtual network interface card is configured to be hardware passthrough) may be connected to the network interface card, and other virtual machines (an operation mode of a virtual network interface card is configured to be software passthrough) are connected to the virtual switch. Specifically, the virtual machines may be configured as required based on a scenario, and not all virtual machines are necessarily connected to the network interface card. It may be understood that the server architecture in FIG. 5 is only an example implementation in embodiments of the present invention, and a server architecture in embodiments of the present invention is not limited to the foregoing server architecture.

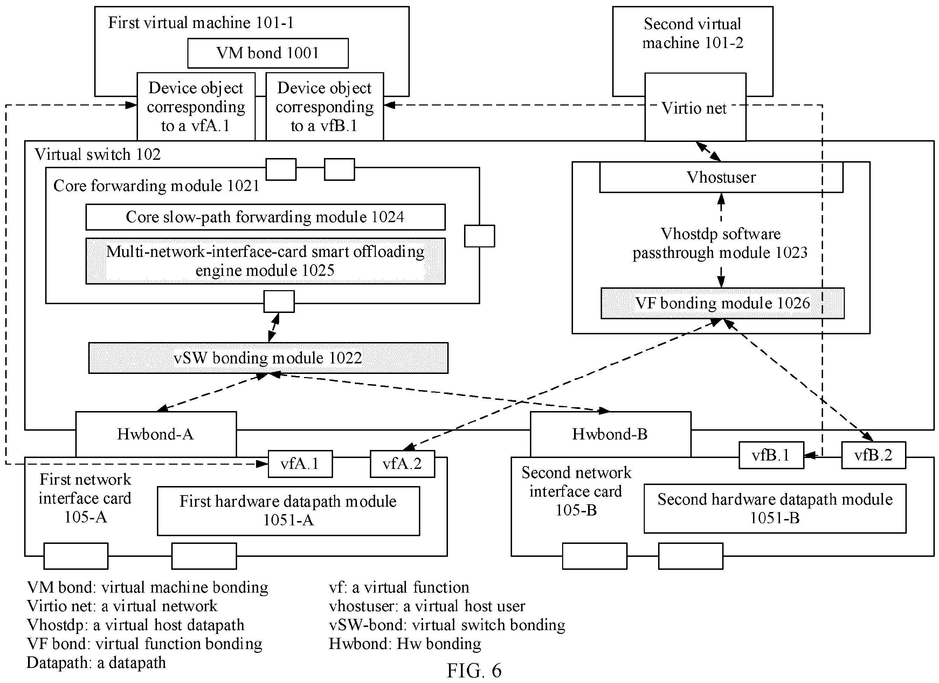

Based on the foregoing server architecture, an embodiment of the present invention provides a physical machine 10 used in the server architecture. FIG. 6 is a schematic diagram of a structure of a physical machine according to an embodiment of the present invention. A hardware environment of the physical machine includes a host, a first network interface card 105-A, and a second network interface card 105-B. A first virtual machine 101-1, a second virtual machine 101-2, and a virtual switch 102 run on the host. It should be noted that the first network interface card 105-A and the second network interface card 105-B in this embodiment of the present invention are essentially the same, and both may be the network interface card 105 provided in the embodiment corresponding to FIG. 5. For ease of description, two network interface cards included in the physical machine are respectively named as the first network interface card and the second network interface card. Likewise, both the first virtual machine 101-1 and the second virtual machine 101-2 in this embodiment of the present invention may be the virtual machine 101 provided in the embodiment corresponding to FIG. 5. For ease of description, a virtual machine in which an operation mode of a virtual network interface card included in the virtual machine is configured to be a hardware passthrough mode is referred to as the first virtual machine 101-1, and a virtual machine in which an operation mode of a virtual network interface card included in the virtual machine is configured to be a software passthrough mode is referred to as the second virtual machine 101-2.

The first virtual machine 101-1 in which the operation mode of the virtual network interface card is configured to be the hardware passthrough mode includes a virtual machine bonding (VM bond) module 1001 and a device object. The virtual machine generates different device objects for a virtual function extended from each network interface card, and these different device objects are uniformly managed by a virtual function driver of the virtual machine. The virtual function driver is configured to: in a hardware passthrough scenario, implement data transmission between the virtual machine and different virtual functions corresponding to different network interface cards. The virtual function driver is loaded only once. The second virtual machine 101-2 in which the operation mode of the virtual network interface card is configured to be the software passthrough mode includes a para-virtualization driver Virtio-net, and the second virtual machine communicates with the virtual switch through the para-virtualization driver.

The VM bonding module 1001 is essentially a virtual I/O interface, and is configured to: when the virtual network interface card of the first virtual machine 101-1 is configured to be in the virtual function hardware passthrough mode, bond, in the virtual machine, two virtual functions respectively allocated by the two network interface cards to the virtual machine to form a network interface. Therefore, when sending a packet, the virtual machine selects one of the virtual functions by using the VM bonding module 1001 and based on a hash algorithm, and then sends, by using the virtual function, the packet to a network interface card 105 from which the virtual function is extended. Specifically, in the hardware passthrough scenario, from a perspective of the virtual switch side, the virtual machine side provides only one logical port, namely, the VM bonding module 1001. When a packet is sent from the virtual machine, the packet may include a plurality of flows. The virtual machine determines a hash value based on a 5-tuple (that is, a source IP address (SIP), a source port number (SPORT), a destination IP address (DIP), a destination port number (DPORT), and a transport layer protocol number (IP type) of the packet, performs hash load sharing on the first network interface card 105-A and the second network interface card 105-B, and then determines the first network interface card (and/or the second network interface card) and a virtual function vfA.1 allocated by the first network interface card to the first virtual machine 101-1 (and/or a virtual function vfB.1 allocated by the second network interface card to the first virtual machine 101-1).

The virtual switch 102 includes a core forwarding module 1021, a virtual switch bonding (vSW-bond) module 1022, and a Vhostdp software passthrough module 1023. The core forwarding module 1021 further includes a software slow-path forwarding module 1024 and a multi-network-interface-card smart offloading engine module 1025. Functions of the foregoing software modules are described as follows.

The software slow-path forwarding module 1024 is responsible for flow rule management and packet slow-path matching for the virtual switch 102, and provides service functions such as tunnel management and security rule management.

The multi-network-interface-card smart offloading engine module 1025 is responsible for collecting a plurality of exact match flow tables that match a packet during slow-path forwarding and a corresponding packet editing result, combining and normalizing the information, performing policy management with reference to a rate and a status of a flow corresponding to the packet, and finally generating an offloaded flow table and delivering the offloaded flow table to a first hardware datapath module 1051-A and a second hardware datapath (Datapath) module 1051-B that correspond to the first network interface card 105-A and the second network interface card 105-B respectively.

The vSW-bonding module 1022 is essentially a virtual I/O interface, and is configured to: after a plurality of links of each network interface card are aggregated into bonding (bond), the vSW-bonding module 1022 aggregates two pieces of bonding (that is, Hwbond-A and Hwbond-B) of the two network interface cards to form an uplink port of the virtual switch. When detecting a status change of the Hwbond-A and/or the Hwbond-B, the vSW-bonding module 1022 synchronously notifies a VF bonding module 1026 in the Vhostdp software passthrough module 1023 and the VM bonding module 1001 in the first virtual machine 101-1.

The Vhostdp software passthrough module 1023 further includes the VF bonding module 1026. When the virtual network interface card of the second virtual machine 101-2 is configured to be in the para-virtualization virtio mode (namely, the software passthrough mode), the virtual switch allocates, from each of the two network interface cards for the second virtual machine 101-2, one virtual function corresponding to the virtual network interface card. The VF bonding module 1026 is essentially a virtual I/O interface, and is configured to: when the virtual network interface card of the second virtual machine 101-2 is configured to be in the software passthrough mode, bond, in the Vhostdp software passthrough module 1023, two virtual functions respectively allocated by the two network interface cards to the virtual machine, where a backend of the virtio virtual network interface card and the bonding of the two virtual functions constitute a peer-to-peer relationship. A packet is transferred by using the Vhostdp software passthrough module 1023. In an optional implementation, when a virtual network interface card of a virtual machine is further configured into K (K is an even number) queues on the physical machine by using a multi-queue mechanism, each virtual function corresponding to the first network interface card and the second network interface card is responsible for sending and receiving traffic of K/2 queues, and a one-to-one correspondence is established between a virtual network interface card queue and a virtual function queue. In this way, the Vhostdp software passthrough module 1023 sends or receives a packet in a zero-copy manner.

The network interface card includes a hardware datapath module, bonding, and at least one virtual function. Specifically, as shown in FIG. 6, the first network interface card 105-A includes a first hardware datapath module 1051-A, the Hwbond-A, the virtual function vfA.1, and a virtual function vfA.2, and the second network interface card 105-B includes a second hardware datapath module 1051-B, the Hwbond-B, the virtual function vfB.1, and a virtual function vfB.2.

Functions of the foregoing software modules are described as follows.

The first hardware datapath module 1051-A or the second hardware datapath module 1051-B is specifically configured to receive the offloaded flow table delivered by the multi-network-interface-card smart offloading engine module 1025. For example, when a packet sent by the first virtual machine 101-1 or the second virtual machine 101-2 reaches at least one of the first network interface card 105-A and the second network interface card 105-B, the first network interface card 105-A (or the second network interface card 105-B) queries, by using the first hardware datapath module 1051-A (or the second hardware datapath module 1051-B) in the first network interface card 105-A (or the second network interface card 105-B), for an offloaded flow table matching the packet; and if an offloaded flow table matching the packet exists, forwards the packet based on the offloaded flow table; or if no offloaded flow table matching the packet exists, sends, by using an uplink call upcall thread, the packet to the software slow-path forwarding module 1024 and the multi-network-interface-card smart offloading engine module 1025 for matching and learning, so as to generate an exact match flow table corresponding to the packet. The multi-network-interface-card smart offloading engine module 1025 finally offloads the generated exact match flow table to the first hardware datapath module 1051-A and the second hardware datapath module 1051-B.

Bonding (the Hwbond-A or the Hwbond-B shown in FIG. 6) is a logical port formed by aggregating physical ports in each network interface card based on a link aggregation control protocol LACP.

A virtual function is a "network interface card" or an instance obtained by virtualizing a network interface card that supports SR-I/OV After the SR-I/OV is enabled on the network interface card, the network interface card exchanges data with a VF driver of a virtual machine by using the virtual function VF.

It may be understood that the structure of the physical machine in FIG. 6 is only an example implementation in embodiments of the present invention, and a structure of a physical machine in embodiments of the present invention includes but is not limited to the foregoing structure.

It should be noted that the modules shown in FIG. 6 may be software modules or programs running on the physical machine, and corresponding functions are implemented when the modules or the programs are executed by a processor. It may be understood that the modules provided in this embodiment of this application may alternatively be implemented in a form of hardware, for example, implemented as a processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. This is not limited in this application.

In this embodiment of this application, there are three types of virtual I/O interfaces: the VM bonding module 1001, the VF bonding module 1026, and the vSW-bonding module 1022. When the virtual network interface card of the virtual machine is configured to be in the hardware passthrough mode, slow-path forwarding for a packet is performed based on the VM bonding module 1001 and the vSW-bonding module 1022, and fast-path forwarding for a packet is performed based on the VM bonding module 1001. When the virtual network interface card of the virtual machine is configured to be in the software passthrough mode, slow-path forwarding for a packet is performed based on the VF bonding module 1026 and the vSW-bonding module 1022, and fast-path forwarding for a packet is performed based on the VF bonding module 1026. Therefore, the foregoing three types of virtual I/O interfaces can be used as required based on a scenario, without being limited by hardware specifications. In addition, the physical machine provided in this embodiment of this application supports failure detection and self-healing, and automatically switches to the software passthrough mode to continue to provide a service when detecting that the virtual network interface card fails in the hardware passthrough mode; and also supports simultaneous offloading for a plurality of network interface cards. For example, a primary network interface card and a secondary network interface card are used, and when the primary network interface card fails, the virtual switch automatically switches to the secondary network interface card, and automatically synchronizes offloaded data.

Based on the server architecture provided in FIG. 5 and the physical machine provided in FIG. 6, the technical problems proposed in this application are specifically analyzed and resolved with reference to a flow table processing method provided in this application.

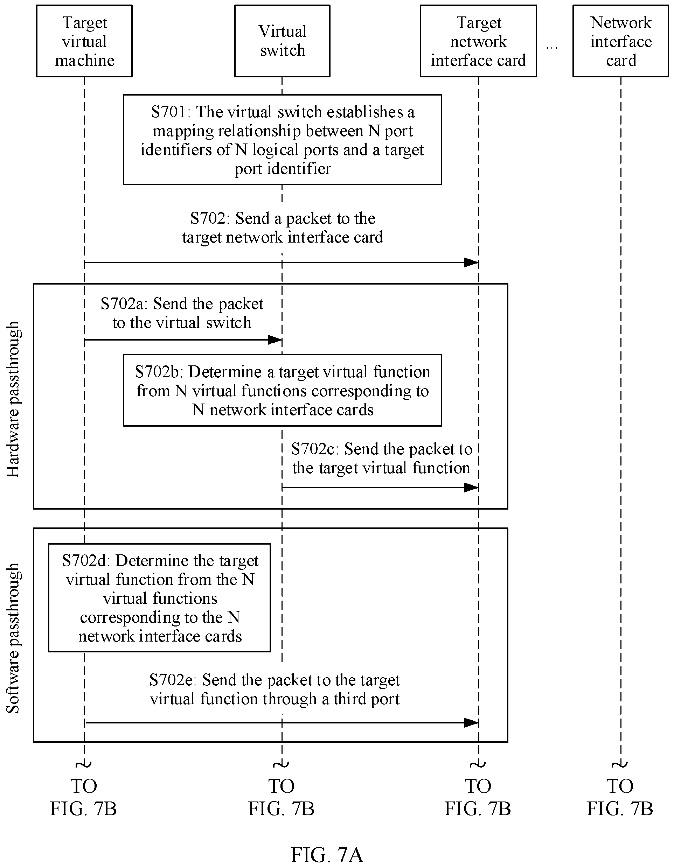

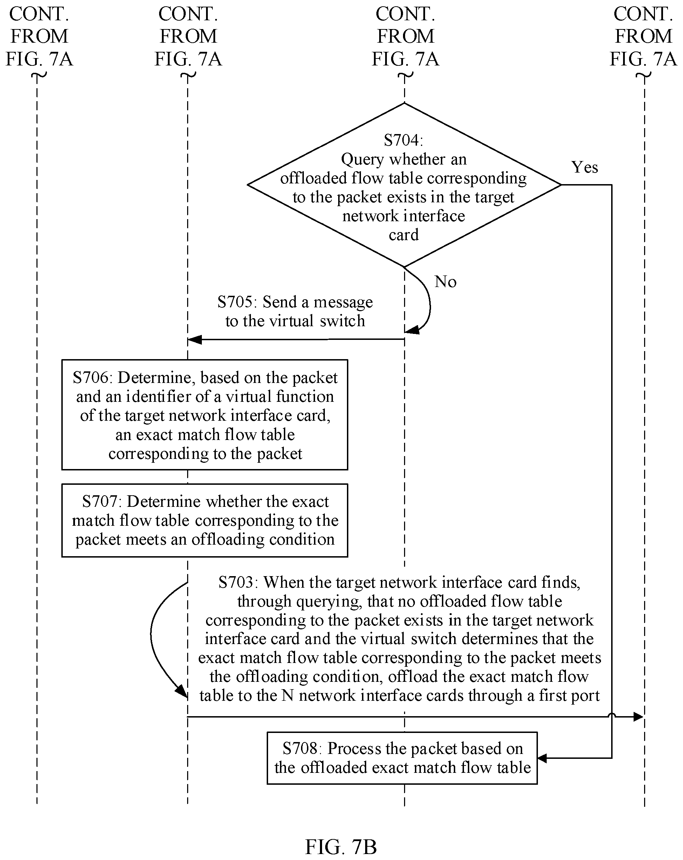

FIG. 7A and FIG. 7B are a schematic flowchart of a flow table processing method according to an embodiment of the present invention. The method may be applied to any physical machine 10 in the server architecture in FIG. 5. The method may be applied to the physical machine 10 in FIG. 6. The physical machine 10 may be configured to support and perform step S701 and step S702 in the method process shown in FIG. 7A and FIG. 7B. The physical machine includes a host and N network interface cards, a virtual switch and M virtual machines run on the host, the N network interface cards are connected to the host through a host interface, and the N network interface cards are connected to an external network through a network interface, where M and N are integers greater than or equal to 2. With reference to FIG. 5, the following provides descriptions from a perspective of interaction between a virtual machine, a virtual switch, and a network interface card.

The method may include the following step S701 to step S703. Optionally, the method may further include step S704 to step 707. Optionally, the method may further include step S708. Step S702 may optionally include S702a to S702c, and may further include S702d and S702e.

S701: The virtual switch establishes a mapping relationship between N port identifiers of N logical ports and a target port identifier, to aggregate the N logical ports into a first port, where the logical port corresponding to each network interface card is a logical port formed by aggregating physical ports of each network interface card based on a link aggregation control protocol LACP.

In this embodiment of the present invention, the first port is a logical port formed by aggregating the N logical ports corresponding to the N network interface cards, and the N logical ports are set to correspond to the target port identifier. Specifically, first, physical ports in each network interface card are aggregated into a logical port based on the link aggregation control protocol LACP, so as to form first-level bonding; and then the virtual switch establishes the mapping relationship between the N port identifiers of the N logical ports and the target port identifier, to set the N logical ports corresponding to the N network interface cards to correspond to the target port identifier, so as to form second-level load balancing bonding. By using the foregoing two levels of bonding, an exact match flow table can be offloaded to a plurality of network interface cards. When any network interface card connected to the virtual switch fails, the virtual switch may automatically switch to another available network interface card, thereby ensuring reliability across network interface cards. The N logical ports are set to correspond to the target port identifier, to aggregate the N logical ports corresponding to the N network interface cards. Herein, a reason why the N logical ports are set to correspond to the target port identifier is as follows: If different network interface cards correspond to different logical port identifiers, the different logical port identifiers mean that the plurality of network interface cards correspond to a plurality of different logical links. In this case, data loopback may occur between a physical switch and the virtual switch based on the plurality of different logical links corresponding to the plurality of network interface cards. For example, a first network interface card of the plurality of network interface cards receives an address resolution protocol (Address Resolution Protocol, ARP) packet, where the packet may be sent by a virtual machine to the first network interface card, or may be sent by another physical machine to the first network interface card by using the physical switch. An exact match flow table corresponding to this type of packet cannot be offloaded to a network interface card, and the packet needs to be broadcast based on the virtual switch. Therefore, the first network interface card sends the ARP packet to the virtual switch, so that the virtual switch broadcasts the ARP packet. If the ARP packet is sent by another physical machine to the first network interface card by using the physical switch, after the first network interface card sends the ARP packet to the virtual switch through a logical link corresponding to the first network interface card, because the first network interface card and a second network interface card of the plurality of network interface cards correspond to different logical links, the virtual switch re-broadcasts the ARP packet to the physical switch through a logical link corresponding to the second network interface card. In this case, the ARP packet causes data loopback between the virtual switch and the physical switch. If the packet is sent by another virtual machine to the first network interface card, after the first network interface card sends the ARP packet to the virtual switch through a logical link corresponding to the first network interface card, the virtual switch broadcasts the packet to the physical switch through a logical link corresponding to a second network interface card. After receiving the ARP packet, the physical switch re-broadcasts the packet to the virtual switch through the logical link corresponding to the first network interface card. In this case, the ARP packet also causes data loopback between the virtual switch and the physical switch. The data loopback between the physical switch and the virtual switch affects system performance and even causes a packet processing exception.

Step S702: A target virtual machine sends a packet to a target network interface card.

A packet received by the target network interface may be sent by the target virtual machine, or may be sent by another physical machine by using the physical switch. In this embodiment of this application, an example in which the target virtual machine sends a packet to the target network interface card is used for description.

The target virtual machine is any one of the M virtual machines, and the target network interface card is one of the N network interface cards. Specifically, the target virtual machine includes a virtual network interface card, and an operation mode of the virtual network interface card includes a software passthrough mode and a hardware passthrough mode. When the operation mode of the virtual network interface card of the target virtual machine is configured to be the software passthrough mode, the target virtual machine sends the packet to a software passthrough module of the virtual switch. The software passthrough module selects a virtual function by using an internal VF bonding module and based on a hash algorithm, and then determines the target network interface card from which the virtual function is extended, and sends the packet to the target network interface card. When the operation mode of the virtual network interface card of the target virtual machine is configured to be the hardware passthrough mode, the target virtual machine selects a virtual function for the packet by using an internal VM bonding module and based on a hash algorithm, and then determines the target network interface card from which the virtual function is extended, and sends the packet to the target network interface card by using the VM bonding module. In the VF bonding module, N virtual functions corresponding to the N network interface cards are aggregated. In the VM bonding module, the N virtual functions corresponding to the N network interface cards are aggregated.

Offloaded flow tables stored in the N network interface cards included in the physical machine are completely the same. Therefore, regardless of a specific network interface card to which a virtual function selected by the software passthrough module by using the internal VF bonding module or by the target virtual machine by using the internal VM bonding module corresponds, the virtual function can forward the packet. In addition, in a direction of sending data to the host and the virtual machine by using the physical switch, the physical switch may also select a network interface card based on a hash algorithm, and then the selected network interface card forwards the data.

Step S703: When the target network interface card finds, through querying, that no offloaded flow table corresponding to the packet exists in the target network interface card, the virtual switch offloads an exact match flow table to the N network interface cards through the first port.

In this embodiment of the present invention, the first port is formed through the foregoing two levels of bonding. This can avoid a problem that data loopback may occur between the physical switch and the virtual switch when the N logical ports respectively correspond to different port identifiers, and further affect system performance and even cause a packet processing exception. In addition, an exact match flow table can be offloaded to a plurality of network interface cards, that is, the virtual switch can offload the exact match flow table to all the network interface cards through the first port, thereby resolving a problem that a service is terminated due to a failure of a single network interface card in a process of offloading the exact match flow table to the single network interface card or processing the packet based on the single network interface card. The virtual switch offloads the exact match flow table to all the network interface cards connected to the host, so that the virtual switch can switch to another network interface card when any network interface card fails, thereby ensuring reliability of a packet processing service.

In a possible implementation, before the virtual switch offloads the exact match flow table to the N network interface cards through the first port when determining that the exact match flow table corresponding to the packet meets an offloading condition, the method may further include steps S704 to S707 in the following steps.

Step S704: The target network interface card queries whether an offloaded flow table corresponding to the packet exists in the target network interface card.

Specifically, the packet includes matching information and a payload. The matching information is used to perform matching against a match field of a flow table. The flow table is a table that describes specific processing to be performed on a packet of a specific type of data flow, and is used to control a data flow in a Software Defined Network(SDN). The flow table may also be referred to as an SDN flow table, and may be specifically a flow table that complies with the openflow protocol or a flow table that complies with another protocol. Flow tables are specifically classified into an offloaded flow table (also referred to as a hardware flow table) and an exact match flow table (also referred to as a software flow table) based on different storage locations. A flow table stored in the network interface card is an offloaded flow table. A flow table generated by the virtual switch through slow-path forwarding learning based on a packet and an identifier of a virtual function is an exact match flow table (stored in the virtual switch). The offloaded flow table stored in the network interface card is synchronized with the exact match flow table located in the virtual switch. The flow table includes at least the match field and an execution field. The match field is used to perform matching against a packet, and the execution field indicates an action to be performed on a packet that matches the flow table. The execution field includes an identifier of the action for the packet, for example, forwarding, discarding, or sending to an SDN controller. The matching information of the packet indicates feature information of a data flow to which the packet belongs. The matching information may be specifically several fields carried in a packet header of the packet. These fields are carried in all packets that belong to one data flow, that is, packets that belong to one data flow have same matching information. In an embodiment, the matching information of the packet may be a source IP address (SIP), a source port number (SPORT), a destination IP address (DIP), a destination port number (DPORT), a transport layer protocol number (IP type), and a subnet identifier. A data flow (which may also be referred to as a "connection") may be uniquely determined by using the information. This embodiment of this application is not limited thereto. Other information that can uniquely determine a data flow may also be used as the matching information of the packet. A data flow indicates a series of packets that carry same matching information. Specifically, matching information of all packets in one data flow can match a match field of an exact match flow table or an offloaded flow table corresponding to the data flow.

That the target network interface card queries whether an offloaded flow table corresponding to the packet exists in the target network interface card may be specifically as follows: The target network interface card queries, based on the matching information of the packet, whether a match field matching the matching information of the packet exists in the target network interface card, and then determines a corresponding offloaded flow table based on the match field.

Step S705: The target network interface card sends a message to the virtual switch when finding, through querying, that no offloaded flow table corresponding to the packet exists in the target network interface card.

The message carries the packet and an identifier of a virtual function used by the target network interface card to receive the packet. Specifically, the target network interface card cannot process the packet when finding, through querying, that no offloaded flow table corresponding to the packet exists in the target network interface card, and therefore needs to send the packet and the identifier of the virtual function of the target network interface card to the virtual switch by using an upcall thread, so that the virtual switch determines, based on the packet and the identifier of the virtual function of the target network interface card, the exact match flow table corresponding to the packet. The identifier of the virtual function of the target network interface card not only indicates a network interface card from which the packet is sent, but also because the virtual function of the network interface card corresponds to the virtual machine, the identifier of the virtual function of the target network interface card may further indicate a virtual machine from which the packet is sent.

Optionally, if the target network interface card finds that the offloaded flow table corresponding to the packet exists in the target network interface card, the target network interface card may directly forward the packet to another virtual machine or forward the packet to the external network by using the network interface card.

Step S706: The virtual switch determines, based on the packet and the identifier of the virtual function used by the target network interface card to receive the packet, the exact match flow table corresponding to the packet.

Specifically, after the target network interface card sends the message to the virtual switch, the virtual switch receives the message through a proxy port of the virtual network interface card. The virtual switch performs, by using a software slow-path forwarding module, packet slow-path matching based on the packet and the identifier of the virtual function used by the target network interface card to receive the packet; executes security check logic, status update logic, destination location search logic, and the like; and finally determines the exact match flow table corresponding to the packet. Specifically, the virtual switch analyzes, by using the software slow-path forwarding module and based on the packet and the identifier of the virtual function of the target network interface card, information carried in the packet, and determines how to process the packet. After packet processing is completed, the software slow-path forwarding module records a processing process and generates the exact match flow table corresponding to the packet. The foregoing process of analyzing and processing the packet and generating the exact match flow table corresponding to the packet by the software slow-path forwarding module may also be referred to as "slow-path forwarding" for the packet. In other words, a packet processing process in which the virtual switch participates may be referred to as "slow-path forwarding". However, in another embodiment of this application, "fast-path forwarding" refers to a process in which a packet is directly processed on a network interface card based on matching against an offloaded flow table, without passing through a virtual switch. That the virtual switch determines, based on the packet and the identifier of the virtual function used by the target network interface card to receive the packet, the exact match flow table corresponding to the packet may be specifically: determining, based on the foregoing matching information of the packet and the identifier of the virtual function, the exact match flow table corresponding to the packet.

Step S707: The virtual switch determines whether the exact match flow table corresponding to the packet meets the offloading condition.

Specifically, after the virtual switch determines, by using the software slow-path forwarding module, the exact match flow table corresponding to the packet, the virtual switch determines, by using a multi-network-interface-card smart offloading engine module, whether the exact match flow table corresponding to the packet can be offloaded to a network interface card, that is, determines whether the exact match flow table corresponding to the packet meets the offloading condition.

In a possible implementation, that the virtual switch determines that the exact match flow table corresponding to the packet meets an offloading condition includes: The virtual switch determines, based on the packet, that a connection between the virtual switch and a virtual machine sending the packet is in a stable state; and/or the virtual switch determines, based on the packet, that a flow rate of a virtual machine sending the packet is greater than or equal to a preset threshold. A network interface card has limited storage space, and therefore can hardly store a large quantity of hardware flow tables. If the connection between the virtual machine sending the packet and the virtual switch is in an unstable state or the flow rate of the virtual machine sending the packet is less than the preset threshold, the exact match flow table corresponding to the packet does not need to be offloaded to a network interface card, to avoid occupying storage space of the network interface card and reducing packet processing efficiency of the network interface card. When the virtual switch determines that the exact match flow table corresponding to the packet meets the offloading condition, the virtual switch offloads the exact match flow table to the N network interface cards through the first port.

In the embodiment corresponding to step S701 to step S707, the target virtual machine sends the packet to the target network interface card; the target network interface card sends the message to the virtual switch when finding, through querying, that no offloaded flow table corresponding to the packet exists in the target network interface card; and the virtual switch determines, based on the message, the exact match flow table corresponding to the packet, and when determining that the exact match flow table meets the offloading condition, offloads the exact match flow table to all the network interface cards through the first port formed by aggregating all the network interface cards connected to the host. In this way, a packet processing process can be completed in the network interface cards, and the host does not need to perform processing, thereby reducing load of the host, effectively utilizing hardware resources such as the network interface cards, and improving system reliability. In addition, the following possible problem is resolved: In a process of offloading the exact match flow table to a single network interface card or processing the packet based on a single network interface card, a service is terminated due to a failure of the network interface card. The virtual switch offloads the exact match flow table to all the network interface cards connected to the host, so that the virtual switch can switch to another network interface card when any network interface card fails, thereby ensuring reliability of a packet processing service. In addition, the following problem can be avoided: Data loopback may occur between the physical switch and the virtual switch when the N logical ports respectively correspond to different port identifiers, and further affect system performance and even cause a packet processing exception.

As shown in the schematic diagram of the architecture of the physical machine shown in FIG. 6, the operation mode of the virtual network interface card of the target virtual machine may include the software passthrough mode and the hardware passthrough mode. When the virtual network interface card of the virtual machine is configured to be in the hardware passthrough mode, the virtual machine is directly connected to a network interface card. When the virtual network interface card of the virtual machine is configured to be in the software passthrough mode, the virtual machine is connected to a network interface card through the virtual switch.

In a possible implementation, when the operation mode of the virtual network interface card of the target virtual machine is configured to be the software passthrough mode, that the target virtual machine sends the packet to the target network interface card in step S702 includes the following steps S702a to S702c.

S702a: The target virtual machine sends the packet to the virtual switch, and the virtual switch receives, through a second port, the packet sent by the target virtual machine, where the second port is a logical port formed by aggregating, in the virtual switch, the N virtual functions corresponding to the N network interface cards. S702b: The virtual switch determines a target virtual function from the N virtual functions corresponding to the N network interface cards. S702c: The virtual switch sends the packet to the target virtual function.

In a possible implementation, when the operation mode of the virtual network interface card of the target virtual machine is configured to be the hardware passthrough mode, that the target virtual machine sends the packet to the target network interface card in step S702 includes the following steps S702d and S702e.

S702d: The target virtual machine determines a target virtual function from the N virtual functions corresponding to the N network interface cards. S702e: The target virtual machine sends the packet to the target virtual function through a third port, where the third port is a logical port formed by aggregating the N virtual functions in the target virtual machine.

Specifically, in the embodiment corresponding to step S702a to step S702e, the virtual network interface card of the virtual machine may be configured to be in the hardware passthrough mode or the software passthrough mode. When detecting a failure in the hardware passthrough mode (or the software passthrough mode), the virtual network interface card may automatically switch to the software passthrough mode (or the hardware passthrough mode) to continue to provide a service, so that the virtual network interface card is used as required based on a scenario, without being limited by hardware specifications.

In a scenario in which the virtual network interface card of the virtual machine is configured to be in the hardware passthrough mode, one virtual function corresponding to the virtual network interface card of the virtual machine is determined from each network interface card, and the virtual machine aggregates the N virtual functions corresponding to the N network interface cards into one logical port, that is, the third port, namely, the VM bonding module. In a scenario in which the virtual network interface card of the virtual machine is configured to be in the software passthrough (Virtio) mode, the virtual switch determines, from each of the N network interface cards, one virtual function corresponding to the virtual network interface card of the virtual machine, and the virtual switch aggregates, in a software passthrough process, the N virtual functions corresponding to the N network interface cards into one logical port, that is, the second port, namely, the VF bonding module. A backend of the virtual network interface card and the second port constitute a peer-to-peer (peer to peer) relationship. Therefore, when the virtual network interface card of the virtual machine is configured to be in the software passthrough mode, packet transmission is completed by using the software passthrough process, and a zero-copy mechanism is used for the packet transmission completed based on the software passthrough process.

In a possible implementation, after step S701 to step S707 are performed, the method may further include the following step S708: The target network interface card processes the packet based on the offloaded exact match flow table.

Specifically, after the virtual switch offloads the exact match flow table to the N network interface cards through the first port, when a subsequent packet in a same data flow as the packet enters the network interface card, the network interface card directly finds, from stored offloaded flow tables through matching based on the packet, an offloaded flow table corresponding to the packet, and then directly performs an action (or an operation) indicated in the offloaded flow table, for example, outputs the packet to a specified port, adds or removes a VLAN tag, adds or removes VxLAN header, modifies a data packet header, jumps to another flow table, discards the packet, or performs a CT action, so as to complete processing on the packet. The packet does not need to be reported to the virtual switch, so that the packet can be processed more quickly, thereby improving packet processing efficiency. There may be a plurality of exact match flow table that are determined by the virtual machine and that correspond to the packet. After receiving the subsequent packet of the same data flow, the network interface card performs processing based on execution fields of the plurality of offloaded exact match flow tables associated with the packet.

In a possible implementation, after step S704 is performed, when the target network interface card finds, through querying, that an offloaded flow table corresponding to the packet exists in the target network interface card, step S708 may alternatively be performed: The target network interface card processes the packet based on the offloaded flow table.

Specifically, packet forwarding may be classified into slow-path forwarding and fast-path forwarding. After receiving the packet sent by the virtual machine, the target network interface card determines, through querying, whether an offloaded flow table corresponding to the packet exists in the target network interface card. When finding, through querying, that an offloaded flow table corresponding to the packet exists in the target network interface card, the target network interface card performs fast-path forwarding for the packet. To be specific, the target network interface card directly processes the packet based on the offloaded flow table stored in the target network interface card. When the target network interface card finds, through querying, that no offloaded flow table corresponding to the packet exists in the target network interface card, the target network interface card performs slow-path forwarding for the packet. To be specific, the target network interface card sends, to the virtual switch, the packet and the identifier of the virtual function used by the target network interface card to receive the packet; the virtual switch performs slow-path forwarding learning on the packet and the identifier of the virtual function, determines the exact match flow table corresponding to the packet, and then offloads the exact match flow table to the target network interface card; and then the target network interface card processes the packet based on the offloaded exact match flow table.

In a possible implementation, exact match flow tables stored in the virtual switch constitute an exact match flow table set, offloaded flow tables stored in each of the N network interface cards constitute an offloaded flow table set, an offloaded flow table included in each offloaded flow table set is in a one-to-one correspondence with an exact match flow table that is included in the exact match flow table set and that meets the offloading condition, and N offloaded flow tables that are in N offloaded flow table sets and that correspond to one exact match flow table are the same. The method further includes: When detecting that a target offloaded flow table stored in a first network interface card of the N network interface cards is deleted, the virtual switch sends a deletion instruction to another network interface card different from the first network interface card in the N network interface cards, where the deletion instruction instructs to delete a stored offloaded flow table that is the same as the target offloaded flow table, the first network interface card is any one of the N network interface cards, and the target offloaded flow table is any one of a plurality of offloaded flow tables stored in the first network interface card.

Specifically, when determining that the exact match flow table corresponding to the packet meets the offloading condition, the virtual switch offloads the exact match flow table to all the network interface cards (namely, the N network interface cards) connected to the host. Therefore, for the N network interface cards, offloaded flow tables stored in any two network interface cards are the same. Offloaded flow tables stored in a network interface card constitute an offloaded flow table set, and same offloaded flow tables in two offloaded flow table sets corresponding to any two network interface cards are associated with a corresponding exact match flow table in the exact match flow table set. For example, a first network interface card and a second network interface card are connected to the host, and the host stores an exact match flow table 0a, an exact match flow table 0b, an exact match flow table 0c, and an exact match flow table 0d that meet the offloading condition. Optionally, the host may further include another exact match flow table that does not meet the offloading condition, and the another exact match flow table that does not meet the offloading condition is not listed as an example in this embodiment of the present invention. Exact match flow tables stored in the host constitute an exact match flow table set. An exact match flow table set that is stored in the host and that meets the offloading condition is offloaded to a network interface card, to generate an offloaded flow table set corresponding to the network interface card. Therefore, the first network interface card stores a first offloaded flow table set, the second network interface card stores a second offloaded flow table set, and an offloaded flow table included in the first offloaded flow table set is completely the same as that included in the second offloaded flow table set. To be specific, the first offloaded flow table set includes an offloaded flow table 1a, an offloaded flow table 1b, an offloaded flow table 1c, and an offloaded flow table 1d, and the second offloaded flow table set includes an offloaded flow table 2a, an offloaded flow table 2b, an offloaded flow table 2c, and an offloaded flow table 2d, where the offloaded flow table 1a is the same as the offloaded flow table 2a, the offloaded flow table 1b is the same as the offloaded flow table 2b, the offloaded flow table 1c is the same as the offloaded flow table 2c, and the offloaded flow table 1d is the same as the offloaded flow table 2d. The same offloaded flow tables 1a and 2a both correspond to the exact match flow table 0a, the same offloaded flow tables 1b and 2b both correspond to the exact match flow table 0b, the same offloaded flow tables 1c and 2c both correspond to the exact match flow table 0c, and the same offloaded flow tables 1d and 2d both correspond to the exact match flow table 0d. When detecting, by using the multi-network-interface-card smart offloading engine module, that any offloaded flow table stored in any network interface card is deleted, the virtual switch sends a deletion instruction to another network interface card different from the any network interface card in the N network interface cards, to instruct the another network interface card to delete a stored offloaded flow table that is the same as the target offloaded flow table, so as to implement unified management on offloaded flow tables between a plurality of network interface cards.

In this embodiment of this application, the physical machine may link, based on a linked list technology, an offloaded flow table stored in a network interface card to an exact match flow table in the virtual switch. When the exact match flow table in the virtual switch is deleted or changed or when an offloaded flow table stored in any network interface card is deleted, the host indicates the network interface card to synchronously delete or modify the offloaded flow table.

In a possible implementation, the method further includes: When detecting a preset condition, the virtual switch sends an update instruction to the N network interface cards, where the update instruction instructs the N network interface cards to update an offloaded flow table associated with a target packet, and the preset condition includes one or more of the following: A slow-path forwarding rule corresponding to the target packet changes, a connection for the target packet ages, a port of a virtual machine is deleted, and a status of a Transmission Control Protocol,(TCP) connection changes.

Specifically, when detecting, by using the multi-network-interface-card smart offloading engine module, that an exact match flow table corresponding to a packet changes, the virtual switch offloads an updated exact match flow table to the N network interface cards, to indicate the N network interface cards to update, based on the newly offloaded exact match flow table corresponding to the packet, an original offloaded flow table corresponding to the packet, so as to implement unified management on offloaded flow tables between a plurality of network interface cards.

Because storage space of a network interface card is limited or storage space allocated to an offloaded flow table is limited, when an offloaded flow table or an exact match flow table corresponding to a target packet is not accessed for a long time, an aging mechanism is started, that is, the offloaded flow table or the exact match flow table that is not accessed for a period of time is deleted, to save storage space. A TCP connection is a network connection established between a client and a physical machine. During establishment of a normal TCP network connection between a client and a physical machine, the client first initiates a handshake signal, the physical machine responds by using a SYN+ACK message to indicate that the signalis received, and then the client responds by using an ACK message. In this way, a reliable TCP connection can be established between the client and the physical machine, and data can be transmitted between the client and the physical machine. Detecting a status change of the TCP connection may include: receiving a TCP link establishment request, and receiving a TCP link deletion request. When finding that a deletion request is received, the network interface card may delete an offloaded flow table corresponding to a packet sent by the client, to avoid occupying space.

In a possible implementation, exact match flow tables stored in the virtual switch constitute an exact match flow table set, offloaded flow tables stored in each of the N network interface cards constitute an offloaded flow table set, an offloaded flow table included in each offloaded flow table set is in a one-to-one correspondence with an exact match flow table that is included in the exact match flow table set and that meets the offloading condition, N offloaded flow tables that are in N offloaded flow table sets and that correspond to one exact match flow table are the same, and the method further includes: When detecting that a second network interface card of the N network interface cards is in an abnormal state, the virtual switch cancels aggregation between a logical port corresponding to the second network interface card and a logical port corresponding to another network interface card different from the second network interface card in the N network interface cards, where the second network interface card is any one of the N network interface cards. The virtual switch sends a marking instruction to the second network interface card, and cancels a one-to-one correspondence between an offloaded flow table stored in the second network interface card and an exact match flow table that is included in the exact match flow table set and that meets the offloading condition, where the marking instruction instructs the second network interface card to mark the stored offloaded flow table as invalid.

Specifically, when determining that the exact match flow table corresponding to the packet meets the offloading condition, the virtual switch offloads the exact match flow table to all the network interface cards (namely, the N network interface cards) connected to the host. Therefore, for the N network interface cards, offloaded flow tables stored in any two network interface cards are the same. An exact match flow table offloaded to a network interface card becomes an offloaded flow table stored in the network interface card. Offloaded flow tables stored in a network interface card constitute an offloaded flow table set, and same offloaded flow tables in two offloaded flow table sets correspond to any two network interface cards are associated. For example, a first network interface card and a second network interface card are connected to the host, the virtual switch stores an exact match flow table set, an exact match flow table that is in the exact match flow table set and that meets the offloading condition is offloaded to the first network interface card to constitute a first offloaded flow table set, and is offloaded to the second network interface card to constitute a second offloaded flow table set, and an offloaded flow table included in the first offloaded flow table set is completely the same as that included in the second offloaded flow table set. To be specific, the first offloaded flow table set includes an offloaded flow table 1a, an offloaded flow table 1b, an offloaded flow table 1c, and an offloaded flow table 1d, and the second offloaded flow table set includes an offloaded flow table 2a, an offloaded flow table 2b, an offloaded flow table 2c, and an offloaded flow table 2d, where the offloaded flow table 1a is the same as the offloaded flow table 2a, the offloaded flow table 1b is the same as the offloaded flow table 2b, the offloaded flow table 1c is the same as the offloaded flow table 2c, and the offloaded flow table 1d is the same as the offloaded flow table 2d. Exact match flow tables that are included in the exact match flow table set stored in the virtual switch and that meet the offloading condition include an exact match flow table 0a, an exact match flow table 0b, an exact match flow table 0c, and an exact match flow table 0d. Optionally, the host may further include another exact match flow table that does not meet the offloading condition, and the another exact match flow table that does not meet the offloading condition is not listed as an example in this embodiment of the present invention. By using the multi-network-interface-card smart offloading engine module, the virtual switch associates the same offloaded flow table 1a and offloaded flow table 2a with the exact match flow table 0a, associates the same offloaded flow table 1b and offloaded flow table 2b with the exact match flow table 0b, associates the same offloaded flow table 1c and offloaded flow table 2c with the exact match flow table 0c, and associates the offloaded flow table 1d and the offloaded flow table 2d with the exact match flow table 0d. In this way, the virtual switch can conveniently manage offloaded flow tables of a plurality of network interface cards by using the multi-network-interface-card smart offloading engine module. For example, when the virtual switch detects, by using a virtual switch bonding module, that the second network interface card is in an abnormal state, the virtual switch cancels, by using the virtual switch bonding module, aggregation between a logical port corresponding to the second network interface card and a logical port corresponding to the first network interface card. In addition, the virtual switch sends a marking instruction to the second network interface card, to instruct the second network interface card to mark the offloaded flow table 1a, the offloaded flow table 1b, the offloaded flow table 1c, and the offloaded flow table 1d that are included in the second offloaded flow table set as invalid; and disassociates, by using the multi-network-interface-card smart offloading engine module, the offloaded flow table 1a from the exact match flow table 0a, disassociates the offloaded flow table 1b from the exact match flow table 0b, disassociates the offloaded flow table 1c from the exact match flow table 0c, and disassociates the offloaded flow table 1d from the exact match flow table 0d.

The offloaded flow tables marked as invalid are recycled by an aging thread. The virtual switch sets, by using the virtual switch bonding module, a link status of a virtual function of a network interface card in an abnormal state to be down, so as to trigger a status of the virtual function of the network interface card in the abnormal state to be down; and then switches, by using the virtual switch bonding module, a link related to the virtual function, to switch to another network interface card connected to the host, so that the another network interface card completes I/O communication, thereby ensuring link reliability.

In a possible implementation, the method further includes: When the second network interface card is in the normal state, the virtual switch aggregates the logical port corresponding to the second network interface card and the logical port corresponding to the another network interface card. The virtual switch offloads an exact match flow table in the exact match flow table set to the second network interface card, where exact match flow tables offloaded to the second network interface card constitute an offloaded flow table set corresponding to the second network interface card. The virtual switch establishes a one-to-one correspondence between an offloaded flow table included in the offloaded flow table set corresponding to the second network interface card and an exact match flow table that is included in the exact match flow table set and that meets the offloading condition.

Specifically, when the virtual switch bonding module of the virtual switch detects that a network interface card in an abnormal state is recovered to a normal state, physical ports in the network interface card are aggregated into a logical port based on a link aggregation control protocol LACP, so as to form first-level bonding; and the virtual switch bonding module sets the logical port corresponding to the network interface card and the logical port corresponding to the another network interface card to correspond to a target port identifier, so as to recover aggregation between the network interface card and the another network interface card, that is, recover second-level bonding. Offloaded flow tables stored in any two network interface cards, other than the network interface card recovered to the normal state, in network interface cards connected to the host are the same. Therefore, the virtual switch offloads, by using the multi-network-interface-card smart offloading engine module, an exact match flow table in the exact match flow table set stored in the virtual switch to the network interface card recovered to the normal state, and establishes a mapping relationship between an offloaded flow table set corresponding to the network interface card and the exact match flow table set. In this way, the offloaded flow table set corresponding to the network interface card recovered to the normal state can be associated with the exact match flow table set and a same flow table in an offloaded flow table set corresponding to the another network interface card, thereby implementing unified management on offloaded flow tables between a plurality of network interface cards.

In the foregoing embodiment, offloaded flow tables of a plurality of network interface cards can be managed, that is, offloaded flow tables can be created, aged, deleted, or the like for a plurality of network interface cards, and consistency check on offloaded flow tables between different network interface cards is supported.

In a possible implementation, when the operation mode of the virtual network interface card of the target virtual machine is configured to be the software passthrough mode, that the target virtual machine sends the packet to the target network interface card further includes: The target virtual machine configures a quantity of queues of the virtual network interface card to K, and divides a to-be-sent data flow into K queues, where the data flow includes the packet, and packets included in the data flow match one offloaded flow table. The virtual switch receives, through the second port, the data flow sent by the target virtual machine. The virtual switch sends the data flow to the N virtual functions corresponding to the N network interface cards, where each virtual function is responsible for receiving data flows of K/N queues, so that the target network interface card queries, based on the data flows of the K/N queues, whether the offloaded flow table corresponding to the packet exists, where K is an integer multiple of N, and the data flow is directly copied from a memory of the target virtual machine to a memory of the N network interface cards based on a correspondence between the K queues of the virtual network interface card and the N virtual functions, to implement zero-copy transmission of the data flow from the target virtual machine to the N network interface cards.

That the target virtual machine sends a packet to a network interface card may include: The target virtual machine sends the packet to a target network interface card in the N network interface cards, so that the target network interface card processes the packet. Alternatively, that the target virtual machine sends a packet to a network interface card may include: The target virtual machine sends the packet to a plurality of network interface cards in the N network interface cards, so that the plurality of network interface cards jointly process the packet, to improve packet processing efficiency. In this embodiment of this application, for example, the target virtual machine sends the packet to the N network interface cards, and the N network interface cards jointly process the packet. The virtual network interface card of the virtual machine is configured into K queues. When the operation mode of the virtual network interface card of the target virtual machine is configured to be the software passthrough mode, the target virtual machine sends the packet to the software passthrough module of the virtual switch. The software passthrough module receives, in a zero-copy manner, the packet sent by the target virtual machine. The software passthrough module sends, by using the VF bonding module, the packet to the N virtual functions corresponding to the N network interface cards. Each virtual function is responsible for forwarding packets of K/N queues. A correspondence is established between the K queues of the virtual network interface card and a queue including the N virtual functions corresponding to the N network interface cards. The "zero-copy" specifically means that the packet is directly copied from a memory of the target virtual machine to a memory of the network interface card, and the virtual switch does not copy the packet when receiving the packet through the second port or sending the packet to the virtual function. Specifically, in a process of sending the packet from the virtual machine to the network interface card, the packet needs to be transferred by the virtual switch in a software passthrough scenario, and therefore the packet usually needs to be first copied to a memory of the host, and then copied from the memory of the host to the network interface card. Then, in this embodiment of this application, in the software passthrough scenario, there is a correspondence between the queues of the virtual network interface card of the virtual machine and the queue of the virtual functions of the network interface card. When the packet is sent from the virtual machine to the network interface card, the software passthrough module directly maps the memory of the virtual machine to the memory of the network interface card, that is, the network interface card directly performs Direct Memory Access (DMA) to the memory of the virtual machine, thereby implementing zero-copy transmission of the packet through bonding between the queues of the virtual network interface card and the queue of the VFs of the hardware network interface card. Likewise, when the target virtual machine receives the packet sent by the network interface card, the packet is directly copied from the memory of the network interface card to the memory of the target virtual machine, and the virtual switch does not copy the packet when the virtual switch receives, through the second port, the packet sent by the network interface card or when the virtual switch sends the packet to the target virtual machine.

Specifically, a product form for the embodiment corresponding to FIG. 7A and FIG. 7B may be included in software of a physical machine and deployed on a computing node of a cloud platform. During running, program code for the embodiment corresponding to FIG. 7A and FIG. 7B may run in a host memory of a physical machine and a hardware memory of a network interface card.

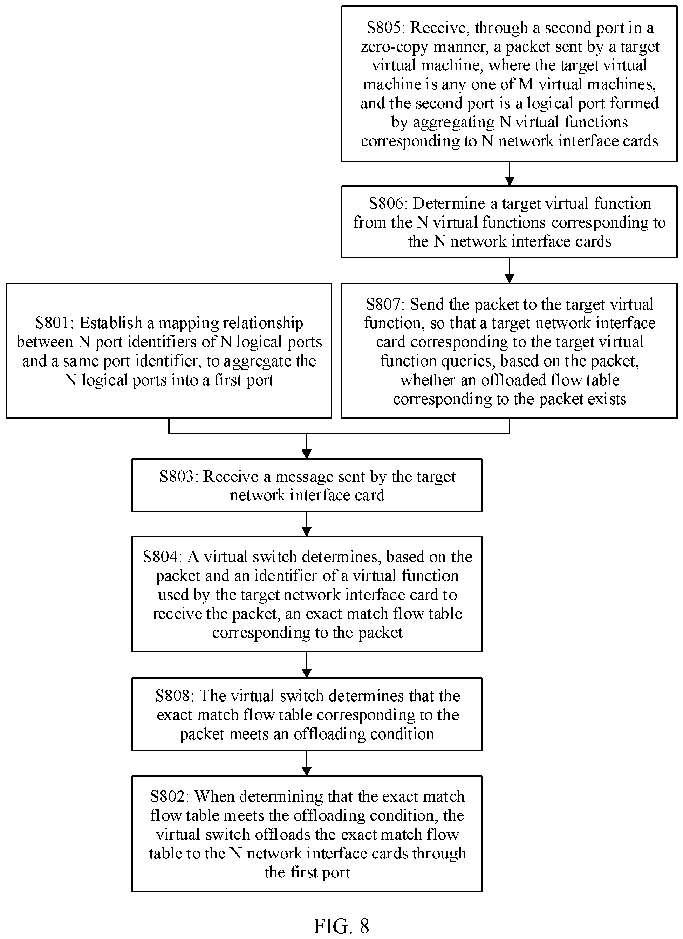

FIG. 8 is a schematic flowchart of another flow table processing method according to an embodiment of the present invention. The method may be applied to the virtual switch 102 in the physical machine architecture shown in FIG. 5. The virtual switch 102 may be configured to support and perform step S801 and step S802 in the method process shown in FIG. 8. With reference to FIG. 8, the following provides descriptions only from a perspective of a virtual switch. The virtual switch is connected to M virtual machines and N network interface cards, where M and N are integers greater than or equal to 2. The method may include the following step S803 and step S804, and optionally, may further include step S805 to step S807.

Step S801: The virtual switch establishes a mapping relationship between N port identifiers of N logical ports and a target port identifier, to aggregate the N logical ports into a first port, where the logical port corresponding to each network interface card is a logical port formed by aggregating physical ports of each network interface card based on a link aggregation control protocol LACP.

Step S802: The virtual switch offloads an exact match flow table to the N network interface cards through the first port.

Optionally, before step S802 is performed, the method may further include the following step S803 and step S804.

Step S803: The virtual switch receives a message sent by a target network interface card, where the message carries a packet received by the target network interface card and an identifier of a virtual function used by the target network interface card to receive the packet, the message is sent after the target network interface card receives the packet and finds, through querying, that no offloaded flow table corresponding to the packet exists in the target network interface card, and the target network interface card is one of the N network interface cards.

Step S804: The virtual switch determines the exact match flow table based on the packet and the identifier of the virtual function used by the target network interface card to receive the packet, where the exact match flow table indicates processing to be performed on the packet.

Optionally, before step S801 to step S804 are performed, the method may further include the following step S805 to step S807.

Step S805: The virtual switch receives, through a second port, the packet sent by a target virtual machine, where the target virtual machine is any one of the M virtual machines, and the second port is a logical port formed by aggregating, in the virtual switch, N virtual functions corresponding to the N network interface cards.

Step S806: The virtual switch determines a target virtual function from N virtual functions corresponding to the N network interface cards.

Step S807: The virtual switch sends the packet to the target virtual function, so that the target network interface card corresponding to the target virtual function queries, based on the packet, whether an offloaded flow table corresponding to the packet exists.

Optionally, before the virtual switch offloads the exact match flow table to the N network interface cards through the first port, the method further includes the following step S808: The virtual switch determines that the exact match flow table meets an offloading condition. The determining that the exact match flow table meets an offloading condition includes: determining, based on a packet corresponding to the exact match flow table, that a connection between a virtual machine sending the packet and the virtual switch is in a stable state; and/or determining, based on a packet corresponding to the exact match flow table, that a flow rate of a virtual machine sending the packet is greater than or equal to a preset threshold.

In a possible implementation, exact match flow tables stored in the virtual switch constitute an exact match flow table set, offloaded flow tables stored in each of the N network interface cards constitute an offloaded flow table set, an offloaded flow table included in each offloaded flow table set is in a one-to-one correspondence with an exact match flow table that is included in the exact match flow table set and that meets the offloading condition, N offloaded flow tables that are in N offloaded flow table sets and that correspond to one exact match flow table are the same, and the method further includes: When detecting that a target offloaded flow table stored in a first network interface card of the N network interface cards is deleted, the virtual switch sends a deletion instruction to another network interface card different from the first network interface card in the N network interface cards, where the deletion instruction instructs to delete a stored offloaded flow table that is the same as the target offloaded flow table, the first network interface card is any one of the N network interface cards, and the target offloaded flow table is any one of a plurality of offloaded flow tables stored in the first network interface card.

In a possible implementation, the method further includes: When detecting a preset condition, the virtual switch sends an update instruction to the N network interface cards, where the update instruction instructs the N network interface cards to update an offloaded flow table associated with a target packet, and the preset condition includes one or more of the following: A slow-path forwarding rule corresponding to the target packet changes, a connection for the target packet ages, a port of a virtual machine is deleted, and a status of a transmission control protocol TCP connection changes.

In a possible implementation, exact match flow tables stored in the virtual switch constitute an exact match flow table set, offloaded flow tables stored in each of the N network interface cards constitute an offloaded flow table set, an offloaded flow table included in each offloaded flow table set is in a one-to-one correspondence with an exact match flow table that is included in the exact match flow table set and that meets the offloading condition, N offloaded flow tables that are in N offloaded flow table sets and that correspond to one exact match flow table are the same, and the method further includes: when it is detected that a second network interface card of the N network interface cards is in an abnormal state, canceling aggregation between a logical port corresponding to the second network interface card and a logical port corresponding to another network interface card different from the second network interface card in the N network interface cards, where the second network interface card is any one of the N network interface cards; and sending a marking instruction to the second network interface card, and canceling a one-to-one correspondence between an offloaded flow table stored in the second network interface card and an exact match flow table that is included in the exact match flow table set and that meets the offloading condition, where the marking instruction instructs the second network interface card to mark the stored offloaded flow table as invalid.

In a possible implementation, the method further includes: when the second network interface card is in the normal state, aggregating the logical port corresponding to the second network interface card and the logical port corresponding to the another network interface card; offloading an exact match flow table in the exact match flow table set to the second network interface card, where exact match flow tables offloaded to the second network interface card constitute an offloaded flow table set corresponding to the second network interface card; and establishing a mapping relationship between the offloaded flow table set corresponding to the second network interface card and the exact match flow table set.

In a possible implementation, before the receiving a message sent by a target network interface card, the method further includes: receiving, through the second port, a data flow sent by the target virtual machine, where the data flow includes the packet, packets included in the data flow match one offloaded flow table, and the data flow is divided into K queues; and sending the data flow to the N virtual functions corresponding to the N network interface cards, where each virtual function is responsible for receiving data flows of K/N queues, so that the target network interface card queries, based on the data flows of the K/N queues, whether the offloaded flow table corresponding to the packet exists, where K is an integer multiple of N, a virtual network interface card of the target virtual machine is configured into K queues, and the data flow is directly copied from a memory of the target virtual machine to a memory of the N network interface cards based on a correspondence between the K queues of the virtual network interface card and the N virtual functions, to implement zero-copy transmission of the data flow from the target virtual machine to the N network interface cards.

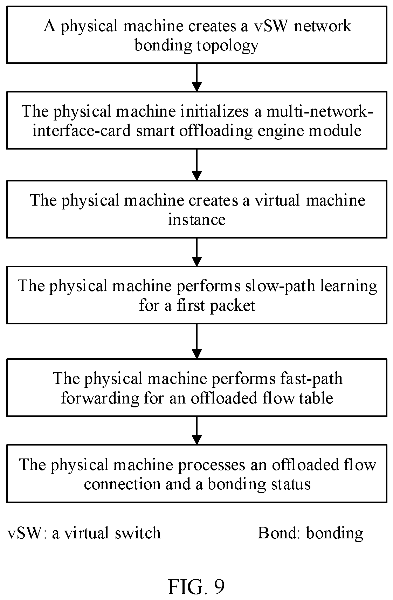

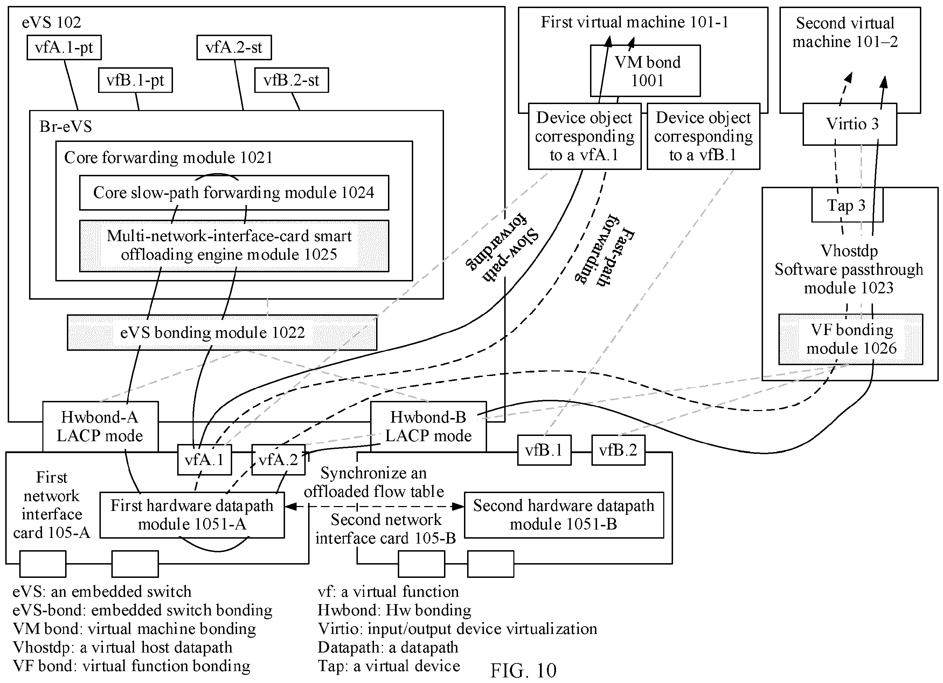

Based on the foregoing physical machine architecture, an embodiment of the present invention provides a schematic flowchart of still another flow table processing method. As shown in FIG. 9 and FIG. 10, an example in which a virtual switch is an eVS and a network interface card is an Hi1822 network interface card is used herein. A virtual network interface card of a first virtual machine is configured to be in a hardware passthrough mode, and a virtual network interface card of a second virtual machine is configured to be in a software passthrough mode. The flow table processing method includes steps (1) to (6).
(1) A physical machine creates a vSW network bonding topology. First, the physical machine creates a vSW object. The physical machine creates the virtual switch object on a framework of the virtual switch to construct a topology of the virtual switch, and adds one or more ports to the virtual switch to form the topology. A process of creating the vSW object is the same as a conventional process, and details are not described herein. Then the physical machine creates two levels of LACP bonding across network interface cards. At a first level, physical ports of each network interface card are aggregated into a logical port based on the LACP. To be specific, a first network interface card and a second network interface card each provide a link-level two-port LACP-based aggregation: Hwbond-A and Hwbond-B, and the two LACP-based aggregations Hwbond-A and Hwbond-B are set to correspond to a target port identifier sysid. At a second level, the eVS abstracts and combines the two LACP-based aggregations into a four-port LACP-based aggregation at a software layer. A physical switch also correspondingly enables a dynamic LACP technology. Because the two LACP-based aggregations corresponding to the two network interface cards are set to correspond to the target port identifier sysid, a four-port LACP-based aggregation may also be obtained through negotiation on the physical switch side.
(2) The physical machine initializes a multi-network-interface-card smart offloading engine module. That the physical machine initializes a multi-network-interface-card smart offloading engine includes: (a) initializing a hardware datapath module of each network interface card, that is, a first hardware datapath module included in the first network interface card, and a second hardware datapath module included in the second network interface card; and (b) allocating a network interface card identifier to each network interface card, where the network interface card identifier indicates a network interface card from which a data flow is received, and an association relationship between a flow table and a network interface card.
(3) The physical machine creates a virtual machine instance.

In this embodiment of this application, a network interface card and a virtual machine are interconnected through a network interface card port. One network interface card port may be connected, by using an SR-I/OV technology, to one virtual machine running on a host. The network interface card port may be a port of a virtual function defined in the SR-I/OV technology. In this embodiment of the present invention, a network interface card and a virtual machine may alternatively be interconnected by using another technology. A technology for interconnecting a network interface card and a virtual machine is not limited in this embodiment of the present invention. The network interface card may alternatively be a network interface card supporting a Virtual Machine Device Queues ( VMDq) function. That the physical machine configures a port for interconnecting a virtual machine and a network interface card may include the following steps.
(a) A host of the physical machine establishes at least one virtual switch port on the virtual switch based on virtual switch port configuration information, where each virtual switch port corresponds to one virtual machine running on the host. For example, the first virtual machine and the second virtual machine run on the physical machine, the virtual network interface card corresponding to the first virtual machine is a virtual network interface card 1, the virtual network interface card corresponding to the second virtual machine is a virtual network interface card 2, and the virtual switch has a port 1 and a port 2. In this case, the port 1 is set to correspond to the virtual network interface card 1, and the port 2 is set to correspond to the virtual network interface card 2, that is, different ports of the virtual switch correspond to different virtual network interface cards and therefore correspond to different virtual machines.
(b) The host generates network interface card port configuration information, and sends the network interface card port configuration information to a network interface card of the physical machine. Specifically, the host obtains the virtual switch port configuration information, and sends the virtual switch port configuration information to a network interface card driver running on the host; and the network interface card driver generates the network interface card port configuration information based on the virtual switch port configuration information, and sends the network interface card port configuration information to the network interface card. A function of the virtual switch port configuration information is similar to that of the network interface card port configuration information. The network interface card driver converts the virtual switch port configuration information into the network interface card port configuration information mainly for complying with a specification of communication between the network interface card driver and the network interface card.
(c) The network interface card configures at least one network interface card port on the network interface card based on the network interface card port configuration information, where each network interface card port is connected to one virtual machine running on the host. For example, in this embodiment of this application, the physical machine allocates, from each of the two network interface cards, one virtual function to be bonded to a virtual network interface card of a virtual machine. The network interface card port may be specifically a port of a virtual function defined in the SR-I/OV technology. Therefore, each port of the virtual switch corresponds to one virtual function of a network interface card, and the network interface card and a virtual machine are interconnected by using a virtual function.

Steps (a) to (c) are optional steps. In addition, steps (a) to (c) are a configuration process of the virtual switch and the network interface card, and (a) to (c) do not need to be performed each time before subsequent steps of (a) to (c) are performed. In the configuration process, a virtual machine running on the host is connected to a network interface card through a network interface card port.

Optionally, that the physical machine creates a virtual machine instance further includes: configuring at least one queue for communication between the virtual switch and the network interface card, where the at least one queue is used by the virtual switch to return, to the network interface card, a data packet received from the network interface card. A queue may be configured in a plurality of manners. For example, the virtual switch communicates with the network interface card through one queue, and the virtual switch sends, to the queue, all data packets that need to be sent to the network interface card. For another example, the virtual switch communicates with the network interface card through K queues, where K is an integer multiple of a quantity N of network interface cards, and each queue corresponds to one network interface card. A manner of configuring a queue is not limited in this embodiment of the present invention.

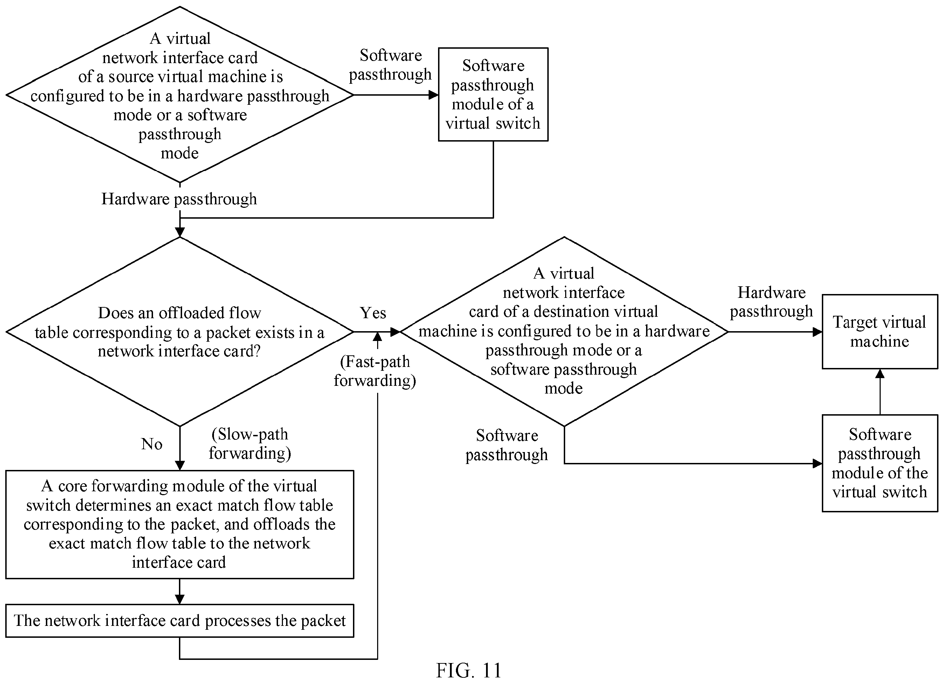

An operation mode of a virtual network interface card of a virtual machine includes a software passthrough operation mode and a hardware passthrough operation mode. Regardless of whether the operation mode of the virtual network interface card is configured to be the software passthrough operation mode or the hardware passthrough operation mode, packet forwarding may be classified into slow-path forwarding and fast-path forwarding. Comprehensively considering the operation mode of the virtual network interface card and the packet forwarding, a packet forwarding path is summarized as shown in Fig. 11. In the server architecture corresponding to FIG. 5, any virtual machine 101 may serve as a source virtual machine in FIG. 11 to send a packet to another virtual machine 101, and any virtual machine 101 may also serve as a destination virtual machine to receive a packet sent by another virtual machine. Any network interface card 105 may serve as the first network interface card and the second network interface card in this application. In a virtio software passthrough scenario, a virtio software passthrough module is notified of information about a proxy port for creating a virtual network interface card on the vSW object and a bonding relationship between a virtual function corresponding to each of the two network interface cards and a virtual network interface card of a virtual machine, and VF bonding is created and is bonded to a backend device of the virtual network interface card. In an optional implementation, when the physical machine further configures the virtual network interface card of the virtual machine into M (an even number is recommended) queues by using a multi-queue mechanism, each virtual function of the VF bonding module in the software passthrough module is responsible for sending and receiving traffic of M/2 queues. A one-to-one correspondence is established between the virtio virtual network interface card and a virtual function queue, and the software passthrough module sends or receives a packet in a zero-copy manner. In a VF hardware passthrough scenario, VM bonding is created in a virtual machine as a network interface.

(4) The physical machine performs slow-path learning for a first packet. As shown in FIG. 10, when the virtual network interface card of the virtual machine is configured to be in the hardware passthrough operation mode, and when the first virtual machine sends a packet, a virtual function is selected by using the internal VM bonding and based on a hash algorithm, and the packet reaches a network interface card from which the virtual function is extended. Optionally, when the virtual network interface card of the virtual machine is configured to be in the software passthrough operation mode, and when the first virtual machine sends a packet, the packet first reaches the software passthrough module of the virtual switch, and the software passthrough module selects a virtual function by using the internal VF bonding and based on a hash algorithm, and then the packet reaches a hardware network interface card from which the virtual function is extended. FIG. 10 shows only a scenario in which the virtual network interface card of the first virtual machine is configured to be in the hardware passthrough operation mode, a scenario in which the virtual network interface card of the first virtual machine is configured to be in the software passthrough operation mode is not shown in FIG. 10. A hardware datapath module of the network interface card is searched to determine whether an offloaded flow table corresponding to the packet exists, and no offloaded flow table is matched. The hardware network interface card generates a message, namely, a hardware upcall. The hardware upcall carries the packet and a virtual function identifier, and the vSW receives the packet through a proxy port of a corresponding virtual network interface card. The vSW performs software slow-path forwarding for the packet by using a forwarding module, performs security check logic, status update logic, destination location search logic, and the like, and notifies the multi-network-interface-card smart offloading engine module of a result. The multi-network-interface-card smart offloading engine module intelligently determines, based on a status, a packet execution action set, and a traffic volume, whether to generate an offloaded flow table. If the condition is not met, the multi-network-interface-card smart offloading engine module discards the offloading. If an offloaded flow table can be installed, the multi-network-interface-card smart offloading engine module simultaneously delivers, to hardware datapath modules of all network interface cards connected to the virtual switch, an exact match flow table corresponding to the packet; and records, in the multi-network-interface-card smart offloading engine module, an association relationship between an offloaded flow table and a network interface card identifier, and an association relationship between same offloaded flow tables corresponding to different network interface cards. The packet action set is divided into two parts. A first part indicates a modification to be performed on a packet header of a packet, and a second part indicates a port from which a packet is to be sent by a network interface card.

(5) The physical machine performs fast-path forwarding for an offloaded flow table.

When the first virtual machine sends a packet, and when the virtual network interface card of the first virtual machine is configured to be in the hardware passthrough operation mode, as shown in FIG. 10, a virtual function is selected by using the VM bonding in the first virtual machine and based on a hash algorithm, and the packet reaches a network interface card from which the virtual function is extended. When the virtual network interface card of the virtual machine is configured to be in the software passthrough operation mode, and when the first virtual machine sends a packet, the packet reaches the software passthrough module of the virtual switch, and the software passthrough module selects a virtual function by using the internal VF bonding and based on a hash algorithm, and then the packet reaches a network interface card from which the virtual function is extended. A hardware datapath module of the network interface card is searched for an offloaded flow table, and the packet is directly forwarded to another virtual machine or an external network based on an offloaded flow table corresponding to the packet. FIG. 10 shows only a scenario in which the virtual network interface card of a first virtual machine is configured to be in the hardware passthrough operation mode, and a scenario in which the virtual network interface card of the second virtual machine is configured to be in the software passthrough operation mode, or another scenario is not shown in FIG. 10.

(6) The physical machine processes an offloaded flow connection and a bonding status when detecting an offloaded flow table change and a network interface card status change.

The offloaded flow table change includes the following trigger condition: A slow-path forwarding rule changes, a connection for a packet ages, a port of a virtual machine is deleted, a status of a TCP connection changes, or the like. When detecting the foregoing trigger condition, the multi-network-interface-card smart offloading engine module offloads an updated exact match flow table to a network interface card connected to the virtual switch. When it is detected that an offloaded flow table in a network interface card connected to the virtual switch is deleted, an associated offloaded flow table in another network interface card that is different from the network interface card and that is connected to the virtual switch is cleared.

When detecting that a network interface card is in an abnormal state (unable to operate), the vSW-bonding module removes the network interface card in the abnormal state from the bonding, and immediately notifies the multi-network-interface-card smart offloading engine module. The multi-network-interface-card smart offloading engine module searches for a stored internal exact match flow table, marks an exact match flow table corresponding to the network interface card in the abnormal state as invalid, and cancels an association between the exact match flow table and a related offloaded flow table in another network interface card that is different from the network interface card in the abnormal state and that is connected to the virtual switch. The exact match flow table marked as invalid is finally recycled and released by an aging thread. In addition, a link status of a VF of the abnormal network interface card is set to be down, so as to trigger a status of the VF of the corresponding network interface card to be down, and switch a link related to the VF bonding. When the network interface card is recovered to normal operation, the vSW-bonding module re-adds the network interface card to the bonding, and notifies the multi-network-interface-card smart offloading engine module. The multi-network-interface-card smart offloading engine module copies an offloaded flow table of another network interface card, delivers the offloaded flow table to the network interface card recovered to normal operation, and records an association relationship between a network interface card identifier of the network interface card recovered to normal operation and the offloaded flow table.

The methods in embodiments of the present invention are described in detail above, and a related apparatus in embodiments of the present invention is provided below.

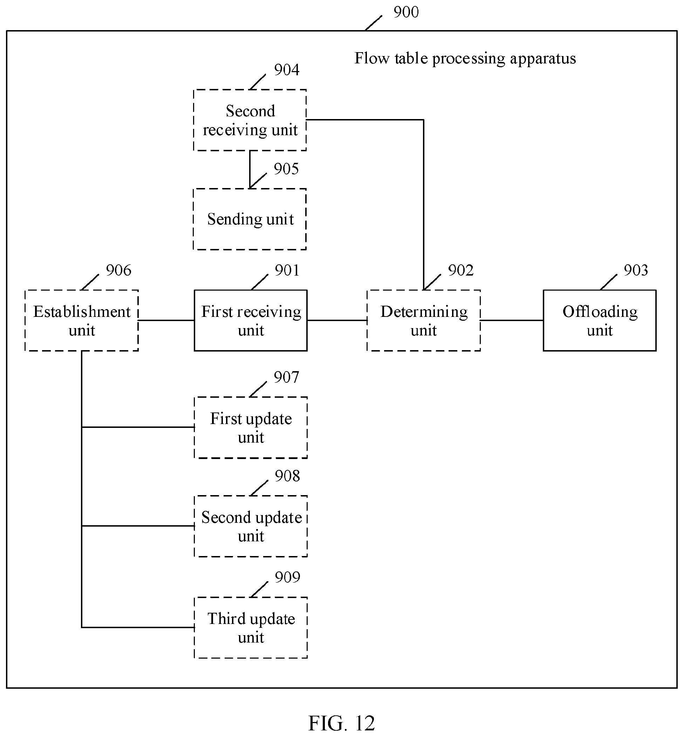

FIG. 12 is a schematic diagram of a structure of a flow table processing apparatus 900 according to an embodiment of the present invention. The flow table processing apparatus may include an establishment unit 901 and an offloading unit 902. The units are described in detail below.

The establishment unit 901 is configured to establish a mapping relationship between N port identifiers of N logical ports and a target port identifier, to aggregate the N logical ports into a first port, where the logical port corresponding to each network interface card is a logical port formed by aggregating physical ports of each network interface card based on a link aggregation control protocol LACP.

The offloading unit 902 is configured to offload, to N network interface cards through the first port, an exact match flow table corresponding to a packet.

In a possible implementation, the apparatus further includes:
a first receiving unit 903, configured to receive a message sent by a target network interface card, where the message carries a packet received by the target network interface card and an identifier of a virtual function used by the target network interface card to receive the packet, the message is sent after the target network interface card receives the packet and finds, through querying, that no offloaded flow table corresponding to the packet exists in the target network interface card, and the target network interface card is one of the N network interface cards; and
a determining unit 904, configured to determine, based on the packet and the identifier of the virtual function used by the target network interface card to receive the packet, the exact match flow table corresponding to the packet.

In a possible implementation, the apparatus further includes:
a second receiving unit 905, configured to receive, through a second port, the packet sent by a target virtual machine, where the target virtual machine is any one of M virtual machines, and the second port is a logical port formed by aggregating, in the virtual switch, N virtual functions corresponding to the N network interface cards, where
the determining unit 904 is further configured to determine a target virtual function from the N virtual functions corresponding to the N network interface cards; and
the apparatus further includes:
   a sending unit 906, configured to send the packet to the target virtual function, so that the target network interface card corresponding to the target virtual function queries, based on the packet, whether an offloaded flow table corresponding to the packet exists.

In a possible implementation, the offloading unit 902 is further configured to determine whether the exact match flow table corresponding to the packet meets an offloading condition. When the offloading unit 902 is configured to determine that the exact match flow table corresponding to the packet meets the offloading condition, the offloading unit 902 is specifically configured to: determine, based on the packet, that a connection between a virtual machine sending the packet and the virtual switch is in a stable state; and/or determine, based on the packet, that a flow rate of a virtual machine sending the packet is greater than or equal to a preset threshold.

In a possible implementation, exact match flow tables stored in the virtual switch constitute an exact match flow table set, offloaded flow tables stored in each of the N network interface cards constitute an offloaded flow table set, an offloaded flow table included in each offloaded flow table set is in a one-to-one correspondence with an exact match flow table that is included in the exact match flow table set and that meets the offloading condition, N offloaded flow tables that are in N offloaded flow table sets and that correspond to one exact match flow table are the same, and the apparatus further includes a first update unit 907. The first update unit 907 is configured to: when it is detected that a target offloaded flow table stored in a first network interface card of the N network interface cards is deleted, send a deletion instruction to another network interface card different from the first network interface card in the N network interface cards, where the deletion instruction instructs to delete a stored offloaded flow table that is the same as the target offloaded flow table, the first network interface card is any one of the N network interface cards, and the target offloaded flow table is any one of a plurality of offloaded flow tables stored in the first network interface card.

In a possible implementation, the apparatus further includes a second update unit 908. The second update unit 908 is configured to: when it is detected that a preset condition is met, send an update instruction to the N network interface cards, where the update instruction instructs the N network interface cards to update an offloaded flow table associated with a target packet, and the condition includes one or more of the following: A slow-path forwarding rule corresponding to the target packet changes, a connection for the target packet ages, a port of a virtual machine is deleted, and a status of a transmission control protocol TCP connection changes.

In a possible implementation, exact match flow tables stored in the virtual switch constitute an exact match flow table set, offloaded flow tables stored in each of the N network interface cards constitute an offloaded flow table set, an offloaded flow table included in each offloaded flow table set is in a one-to-one correspondence with an exact match flow table that is included in the exact match flow table set and that meets the offloading condition, N offloaded flow tables that are in N offloaded flow table sets and that correspond to one exact match flow table are the same, and the apparatus further includes a third update unit 909. The third update unit 909 is configured to: when it is detected that a second network interface card of the N network interface cards is in an abnormal state, cancel aggregation between a logical port corresponding to the second network interface card and a logical port corresponding to another network interface card different from the second network interface card in the N network interface cards, where the second network interface card is any one of the N network interface cards; and send a marking instruction to the second network interface card, and cancel a one-to-one correspondence between an offloaded flow table stored in the second network interface card and an exact match flow table that is included in the exact match flow table set and that meets the offloading condition, where the marking instruction instructs the second network interface card to mark the stored offloaded flow table as invalid.

In a possible implementation, the third update unit 909 is further configured to: when the second network interface card is in the normal state, aggregate the logical port corresponding to the second network interface card and the logical port corresponding to the another network interface card; offload an exact match flow table in the exact match flow table set to the second network interface card, where exact match flow tables offloaded to the second network interface card constitute an offloaded flow table set corresponding to the second network interface card; and establish a one-to-one correspondence between an offloaded flow table included in the offloaded flow table set corresponding to the second network interface card and an exact match flow table that is included in the exact match flow table set and that meets the offloading condition.

In a possible implementation, the second receiving unit 905 is further configured to receive, through the second port, a data flow sent by the target virtual machine, where the data flow includes the packet, packets included in the data flow match one offloaded flow table, and the data flow is divided into K queues; and the sending unit 906 is further configured to send the data flow to the N virtual functions corresponding to the N network interface cards, where each virtual function is responsible for receiving data flows of K/N queues, so that the target network interface card queries, based on the data flows of the K/N queues, whether the offloaded flow table corresponding to the packet exists, where K is an integer multiple of N, a virtual network interface card of the target virtual machine is configured into K queues, and the data flow is directly copied from a memory of the target virtual machine to a memory of the N network interface cards based on a correspondence between the K queues of the virtual network interface card and the N virtual functions, to implement zero-copy transmission of the data flow from the target virtual machine to the N network interface cards.

It should be noted that, for functions of the functional units in the flow table processing apparatus 900 described in this embodiment of the present invention, reference may be made to related descriptions of step S701 to step S708 and step S801 to step S807 in the method embodiments in FIG. 7A and FIG. 7B, and FIG. 8. Details are not described herein again.

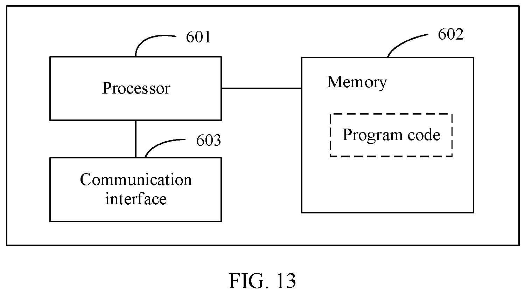

FIG. 13 is a schematic diagram of a structure of a physical machine 10 according to an embodiment of the present invention. The physical machine 10 includes at least one processor 601, at least one memory 602, and at least one communication interface 603. In addition, the device may further include a general-purpose component such as an antenna. Details are not described herein.

The processor 601 may be a general-purpose central processing unit (CPU), a microprocessor, an application-specific integrated circuit (application-specific integrated circuit, ASIC), or one or more integrated circuits configured to control execution of programs for the foregoing solutions.

The communication interface 603 is configured to communicate with another device or a communication network, for example, Ethernet, a radio access network (RAN), a core network, or a Wireless Local Area Networks(WLAN).

The memory 602 may be a read-only memory (ROM), another type of static storage device capable of storing static information and instructions, a random access memory (RAM), or another type of dynamic storage device capable of storing information and instructions, or may be an Electrically Erasable Programmable Read-Only Memory( EEPROM), a Compact Disc Read-Only Memory ( CD-ROM) or another optical disk storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of instructions or data structures and that can be accessed by a computer, but is not limited thereto. The memory may exist independently, and is connected to the processor through a bus. The memory may alternatively be integrated with the processor.

The memory 602 is configured to store application program code for performing the foregoing solutions, and the processor 601 controls execution of the application program code. The processor 601 is configured to execute the application program code stored in the memory 602.

The code stored in the memory 602 may be used to perform the flow table processing method provided in FIG. 5, for example, establishing a mapping relationship between N port identifiers of N logical ports corresponding to N network interface cards and a target port identifier, to aggregate the N logical ports into a first port, where the logical port corresponding to each network interface card is a logical port formed by aggregating physical ports of each network interface card based on a link aggregation control protocol LACP; and offloading, through the first port, an exact match flow table corresponding to a packet to the N network interface cards.

It should be noted that, for functions of the functional units in the physical machine 60 described in this embodiment of the present invention, reference may be made to related descriptions of step S701 to step S708 and step S801 to step S807 in the method embodiments in FIG. 7A and FIG. 7B, and FIG. 8. Details are not described herein again.

In the foregoing embodiments, the descriptions in the embodiments have respective focuses. For a part that is not described in detail in an embodiment, refer to related descriptions in other embodiments.

It should be noted that, for ease of description, the foregoing method embodiments are described as a series of combinations of actions. However, persons skilled in the art should be aware that this application is not limited to the described order of the actions, because some steps may be performed in another order or simultaneously according to this application. In addition, persons skilled in the art should also be aware that embodiments described in this specification are all example embodiments, and the described actions and modules are not necessarily required for this application.

In several embodiments provided in this application, it should be understood that the disclosed apparatuses may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the shown or discussed mutual couplings, direct couplings, or communication connections may be implemented through some interfaces. The indirect couplings or communication connections between the apparatuses or units may be implemented in electrical or another form.

The units described as separate parts may or may not be physically separate, and parts shown as units may or may not be physical units, may be located in one place, or may be distributed on a plurality of network units. Some or all of the units may be selected according to actual requirements to achieve objectives of solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like, and may be specifically a processor in a computer device) to perform all or some of the steps of the methods described in embodiments of this application. The storage medium may include any medium that can store program code, for example, a USB flash drive, a removable hard disk, a magnetic disk, an optical disc, a Read-Only Memory ( ROM), or a Random Access Memory (RAM.

The foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A flow table processing method, applied to a physical machine, wherein the physical machine comprises a host and N network interface cards, a virtual switch and M virtual machines run on the host, the N network interface cards are connected to the host through a host interface, the N network interface cards are connected to an external network through a network interface, M and N are integers greater than or equal to 2, and the method comprises:
establishing, by the virtual switch, a mapping relationship between N port identifiers of N logical ports corresponding to the N network interface cards and a target port identifier, to aggregate the N logical ports into a first port, wherein the first port is a logical port formed by aggregating the N logical ports corresponding to the N network interface cards, and the N logical ports are set to correspond to the target port identifier, wherein the logical port corresponding to each network interface card is a logical port formed by aggregating physical ports of each network interface card based on a link aggregation control protocol LACP;
receiving, by a target network interface card, a packet, wherein the packet is a packet sent by a physical switch connected to the physical machine or a packet sent by a target virtual machine, the target virtual machine is any one of the M virtual machines, and the target network interface card is one of the N network interface cards; and
wherein a flow table includes at least a match field and an execution field, wherein the match field is used to perform matching against a packet, and the execution field is used to indicate an action to be performed on a packet that matches the flow table, and wherein a flow table stored in the network interface card is an offloaded flow table, and a flow table generated by the virtual switch through slow-path forwarding learning based on a packet and an identifier of a virtual function is an exact match flow table,
when the target network interface card finds, through querying, that no offloaded flow table corresponding to the packet exists in the target network interface card, sending, by the target network interface card, a message to the virtual switch, wherein the message carries the packet and an identifier of a virtual function used by the target network interface card to receive the packet; determining, by the virtual switch based on the packet and the identifier of the virtual function, the exact match flow table corresponding to the packet; and offloading, by the virtual switch to the N network interface cards through the first port, the determined exact match flow table corresponding to the packet,
processing, by the target network interface card, the packet based on the offloaded exact match flow table.

2. The method according to claim 1, wherein the method further comprises:
when the target network interface card finds, through querying, that an offloaded flow table corresponding to the packet exists in the target network interface card, processing, by the target network interface card, the packet based on the offloaded flow table.

3. The method according to claim 1 or 2, wherein before the receiving a message sent by a target network interface card, the method further comprises:
receiving (S702a), by the virtual switch through a second port, the packet sent by a target virtual machine, wherein the target virtual machine is any one of the M virtual machines, and the second port is a logical port formed by aggregating, in the virtual switch, N virtual functions corresponding to the N network interface cards,
determining (S702b), by the virtual switch, a target virtual function from the N virtual functions corresponding to the N network interface cards; and
sending (S702c), by the virtual switch, the packet to the target virtual function, so that the target network interface card corresponding to the target virtual function queries, based on the packet, whether an offloaded flow table corresponding to the packet exists.

4. The method according to any one of claims 1 to 3, wherein before the offloading (S703), by the virtual switch an exact match flow table to the N network interface cards through the first port, the method further comprises:
determining (S707), by the virtual switch, that the exact match flow table meets an offloading condition, wherein
the determining that the exact match flow table meets an offloading condition comprises:
determining, by the virtual switch, based on a packet corresponding to the exact match flow table, that a connection between a virtual machine sending the packet and the virtual switch is in a stable state; and/or
determining, by the virtual switch, based on a packet corresponding to the exact match flow table, that a flow rate of a virtual machine sending the packet is greater than or equal to a preset threshold.

5. The method according to any one of claims 1 to 4, wherein exact match flow tables stored in the virtual switch constitute an exact match flow table set, offloaded flow tables stored in each of the N network interface cards constitute an offloaded flow table set, an offloaded flow table comprised in each offloaded flow table set is in a one-to-one correspondence with an exact match flow table that is comprised in the exact match flow table set and that meets the offloading condition, and N offloaded flow tables that are in N offloaded flow table sets and that correspond to one exact match flow table are the same.

6. The method according to claim 5, wherein the method further comprises:
when it is detected that a target offloaded flow table stored in a first network interface card of the N network interface cards is deleted, sending, by the virtual switch, a deletion instruction to another network interface card different from the first network interface card in the N network interface cards, wherein the deletion instruction instructs to delete a stored offloaded flow table that is the same as the target offloaded flow table, the first network interface card is any one of the N network interface cards, and the target offloaded flow table is any one of a plurality of offloaded flow tables stored in the first network interface card.

7. The method according to claim 5 or 6, wherein the method further comprises:
when it is detected that a preset condition is met, sending, by the virtual switch, an update instruction to the N network interface cards, wherein the update instruction instructs the N network interface cards to update an offloaded flow table associated with a target packet, and the preset condition comprises one or more of the following: a slow-path forwarding rule corresponding to the target packet changes, a connection for the target packet ages, a port of a virtual machine is deleted, and a status of a transmission control protocol TCP connection changes.

8. The method according to any one of claims 5 to 7, wherein the method further comprises:
when it is detected that a second network interface card of the N network interface cards is in an abnormal state, canceling, by the virtual switch, aggregation between a logical port corresponding to the second network interface card and a logical port corresponding to another network interface card different from the second network interface card in the N network interface cards, wherein the second network interface card is any one of the N network interface cards; and
sending, by the virtual switch, a marking instruction to the second network interface card, and canceling, by the virtual switch, a one-to-one correspondence between an offloaded flow table stored in the second network interface card and an exact match flow table that is comprised in the exact match flow table set and that meets the offloading condition, wherein the marking instruction instructs the second network interface card to mark the stored offloaded flow table as invalid.

9. A flow table processing apparatus (900), adapted to carry out the method according to any one of claims 1 to 8.

10. A computer program, wherein the computer program comprises instructions, and when the computer program is executed by a computer, the computer is enabled to perform the method according to any one of claims 1 to 8.

## Patentansprüche

1. Flusstabellenverarbeitungsverfahren, das auf eine physische Maschine angewandt wird, wobei die physische Maschine einen Host und N Netzschnittstellenkarten, einen virtuellen Schalter und M virtuelle Maschinen, die auf dem Host ausgeführt werden, umfasst, die N Netzschnittstellenkarten über eine Hostschnittstelle mit dem Host verbunden sind, die N Netzschnittstellenkarten über eine Netzschnittstelle mit einem externen Netz verbunden sind, M und N Ganzzahlen größer als oder gleich 2 sind und das Verfahren Folgendes umfasst:
Erstellen, durch den virtuellen Schalter, einer Abbildungsbeziehung zwischen N Anschlusskennungen N logischer Anschlüsse, die den N Netzschnittstellenkarten entsprechen, und einer Zielanschlusskennung, um die N logischen Anschlüsse zu einem ersten Anschluss zu aggregieren, wobei der erste Anschluss ein logischer Anschluss ist, der durch das Aggregieren der N logischen Anschlüsse gebildet wird, die den N Netzschnittstellenkarten entsprechen, und die N logischen Anschlüsse dazu eingestellt sind, der Zielanschlusskennung zu entsprechen, wobei der logische Anschluss, der jeder Netzschnittstellenkarte entspricht, ein logischer Anschluss ist, der durch Aggregieren physischer Anschlüsse jeder Netzschnittstellenkarte basierend auf einem Verknüpfungsaggregationssteuerungsprotokoll, LACP, gebildet wird;
Empfangen, durch eine Zielnetzschnittstellenkarte, eines Pakets, wobei das Paket ein Paket, das durch einen physischen Schalter gesendet wird, der mit der physischen Maschine verbunden ist, oder ein Paket ist, das durch eine virtuelle Zielmaschine gesendet wird, die virtuelle Zielmaschine eine der M virtuellen Maschinen ist und die Zielnetzschnittstellenkarte eine der N Netzschnittstellenkarten ist; und
wobei eine Flusstabelle mindestens ein Übereinstimmungsfeld und ein Ausführungsfeld beinhaltet, wobei das Übereinstimmungsfeld dazu verwendet wird, eine Übereinstimmung mit einem Paket durchzuführen, und das Ausführungsfeld dazu verwendet wird, eine Handlung anzugeben, die an einem Paket durchzuführen ist, das mit der Flusstabelle übereinstimmt, und wobei eine Flusstabelle, die in der Netzschnittstellenkarte gespeichert ist, eine ausgelagerte Flusstabelle ist und eine Flusstabelle, die durch den virtuellen Schalter über Erlernen einer Slow-Path-Weiterleitung basierend auf einem Paket und einer Kennung einer virtuellen Funktion erzeugt wird, eine Flusstabelle exakter Übereinstimmungen ist,
wenn die Zielnetzschnittstellenkarte über Abfragen feststellt, dass keine ausgelagerte Flusstabelle, die dem Paket entspricht, in der Zielnetzschnittstellenkarte vorliegt, Senden, durch die Zielnetzschnittstellenkarte, einer Nachricht an den virtuellen Schalter, wobei die Nachricht das Paket und eine Kennung einer virtuellen Funktion enthält, die durch die Zielnetzschnittstellenkarte dazu verwendet wird, das Paket zu empfangen; Bestimmen, durch den virtuellen Schalter basierend auf dem Paket und der Kennung der virtuellen Funktion, der Flusstabelle exakter Übereinstimmungen, die dem Paket entspricht; und Auslagern, durch den virtuellen Schalter an die N Netzschnittstellenkarten über den ersten Anschluss, der bestimmten Flusstabelle exakter Übereinstimmungen, die dem Paket entspricht,
Verarbeiten, durch die Zielnetzschnittstellenkarte, des Pakets basierend auf der ausgelagerten Flusstabelle exakter Übereinstimmungen.

2. Verfahren nach Anspruch 1, wobei das Verfahren ferner Folgendes umfasst:
wenn die Zielnetzschnittstellenkarte über Abfragen feststellt, dass eine ausgelagerte Flusstabelle, die dem Paket entspricht, in der Zielnetzschnittstellenkarte vorliegt, Verarbeiten, durch die Zielnetzschnittstellenkarte, des Pakets basierend auf der ausgelagerten Flusstabelle.

3. Verfahren nach Anspruch 1 oder 2, wobei das Verfahren vor dem Empfangen einer Nachricht, die durch eine Zielnetzschnittstellenkarte gesendet wird, ferner Folgendes umfasst:
Empfangen (S702a), durch den virtuellen Schalter über einen zweiten Anschluss, des Pakets, das durch eine virtuelle Zielmaschine gesendet wird, wobei die virtuelle Zielmaschine eine der M virtuellen Maschinen ist und der zweite Anschluss ein logischer Anschluss ist, der durch Aggregieren, in dem virtuellen Schalter, N virtueller Funktionen gebildet wird, die den N Netzschnittstellenkarten entsprechen;
Bestimmen (S702b), durch den virtuellen Schalter, einer virtuellen Zielfunktion aus den N virtuellen Funktionen, die den N Netzschnittstellenkarten entsprechen; und
Senden (S702c), durch den virtuellen Schalter, des Pakets an die virtuelle Zielfunktion, sodass die Zielnetzschnittstellenkarte, die der virtuellen Zielfunktion entspricht, basierend auf dem Paket abfragt, ob eine ausgelagerte Flusstabelle vorliegt, die dem Paket entspricht.

4. Verfahren nach einem der Ansprüche 1 bis 3, wobei das Verfahren vor dem Auslagern (S703), durch den virtuellen Schalter, einer Flusstabelle exakter Übereinstimmungen an die N Netzschnittstellenkarten über den ersten Anschluss ferner Folgendes umfasst:
Bestimmen (S707), durch den virtuellen Schalter, dass die Flusstabelle exakter Übereinstimmungen eine Auslagerungsbedingung erfüllt, wobei
das Bestimmen, dass die Flusstabelle exakter Übereinstimmungen eine Auslagerungsbedingung erfüllt, Folgendes umfasst:
Bestimmen, durch den virtuellen Schalter, basierend auf einem Paket, das der Flusstabelle exakter Übereinstimmungen entspricht, dass sich eine Verbindung zwischen einer virtuellen Maschine, die das Paket sendet, und dem virtuellen Schalter in einem stabilen Zustand befindet; und/oder
Bestimmen, durch den virtuellen Schalter, basierend auf einem Paket, das der Flusstabelle exakter Übereinstimmungen entspricht, dass eine Flussrate einer virtuellen Maschine, die das Paket sendet, größer als oder gleich einem voreingestellten Schwellenwert ist.

5. Verfahren nach einem der Ansprüche 1 bis 4, wobei Flusstabellen exakter Übereinstimmungen, die in dem virtuellen Schalter gespeichert sind, einen Flusstabellensatz exakter Übereinstimmungen darstellen, ausgelagerte Flusstabellen, die in jeder der N Netzschnittstellenkarten gespeichert sind, einen ausgelagerten Flusstabellensatz darstellen, eine ausgelagerte Flusstabelle, die in jedem ausgelagerten Flusstabellensatz umfasst ist, in einer Eins-zu-eins-Entsprechung mit einer Flusstabelle exakter Übereinstimmungen steht, die in dem Flusstabellensatz exakter Übereinstimmungen umfasst ist und welche die Auslagerungsbedingung erfüllt, und N ausgelagerte Flusstabellen, die sich in N ausgelagerten Flusstabellensätzen befinden und die einer Flusstabelle exakter Übereinstimmungen entsprechen, die gleichen sind.

6. Verfahren nach Anspruch 5, wobei das Verfahren ferner Folgendes umfasst:
wenn detektiert wird, dass eine ausgelagerte Zielflusstabelle, die in einer ersten Netzschnittstellenkarte der N Netzschnittstellenkarten gespeichert ist, gelöscht wird, Senden, durch den virtuellen Schalter, einer Löschanweisung an eine andere Netzschnittstellenkarte, die sich von der ersten Netzschnittstellenkarte unterscheidet, in den N Netzschnittstellenkarten, wobei die Löschanweisung anweist, eine gespeicherte ausgelagerte Flusstabelle zu löschen, welche die gleiche wie die ausgelagerte Zielflusstabelle ist, die erste Netzschnittstellenkarte eine der N Netzschnittstellenkarten ist und die ausgelagerte Zielflusstabelle eine einer Vielzahl ausgelagerter Flusstabellen ist, die in der ersten Netzschnittstellenkarte gespeichert ist.

7. Verfahren nach Anspruch 5 oder 6, wobei das Verfahren ferner Folgendes umfasst:
wenn detektiert wird, dass eine voreingestellte Bedingung erfüllt wird, Senden, durch den virtuellen Schalter, einer Aktualisierungsanweisung an die N Netzschnittstellenkarten, wobei die Aktualisierungsanweisung die N Netzschnittstellenkarten anweist, eine ausgelagerte Flusstabelle zu aktualisieren, die einem Zielpaket zugeordnet ist, und die voreingestellte Bedingung eines oder mehrere von Folgendem umfasst: eine Slow-Path-Weiterleitungsregel, die dem Zielpaket entspricht, ändert sich, eine Verbindung für das Zielpaket altert, ein Anschluss einer virtuellen Maschine wird gelöscht und ein Status einer Übertragungssteuerungsprotokollverbindung, TCP-Verbindung, ändert sich.

8. Verfahren nach einem der Ansprüche 5 bis 7, wobei das Verfahren ferner Folgendes umfasst:
wenn detektiert wird, dass sich eine zweite Netzschnittstellenkarte der N Netzschnittstellenkarten in einem abnormalen Zustand befindet, Abbrechen, durch den virtuellen Schalter, einer Aggregation zwischen einem logischen Anschluss, welcher der zweiten Netzschnittstellenkarte entspricht, und einem logischen Anschluss, der einer anderen Netzschnittstellenkarte, die sich von der zweiten Netzschnittstellenkarte unterscheidet, in den N Netzschnittstellenkarten entspricht, wobei die zweite Netzschnittstellenkarte eine der N Netzschnittstellenkarten ist; und
Senden, durch den virtuellen Schalter, einer Markierungsanweisung an die zweite Netzschnittstellenkarte und Abbrechen, durch den virtuellen Schalter, einer Eins-zu-Eins-Entsprechung zwischen einer ausgelagerten Flusstabelle, die in der zweiten Netzschnittstellenkarte gespeichert ist, und einer Flusstabelle exakter Übereinstimmungen, die in dem Flusstabellensatz exakter Übereinstimmungen umfasst ist und welcher der Auslagerungsbedingung erfüllt, wobei die Markierungsanweisung die zweite Netzschnittstellenkarte anweist, die gespeicherte ausgelagerte Flusstabelle als ungültig zu markieren.

9. Flusstabellenverarbeitungseinrichtung (900), die dazu angepasst ist, das Verfahren nach einem der Ansprüche 1 bis 8 durchzuführen.

10. Computerprogramm, wobei das Computerprogramm Anweisungen umfasst und, wenn das Computerprogramm durch einen Computer ausgeführt wird, es dem Computer ermöglicht wird, das Verfahren nach einem der Ansprüche 1 bis 8 durchzuführen.

## Revendications

1. Procédé de traitement de table de flux, appliqué à une machine physique, dans lequel la machine physique comprend un hôte et N cartes d'interface réseau, un commutateur virtuel et M machines virtuelles exécutées sur l'hôte, les N cartes d'interface réseau sont connectées à l'hôte par le biais d'une interface hôte, les N cartes d'interface réseau sont connectées à un réseau externe par le biais d'une interface réseau, M et N sont des entiers supérieurs ou égaux à 2, et le procédé comprend :
l'établissement, par le commutateur virtuel, d'une relation de mappage entre N identifiants de port de N ports logiques correspondant aux N cartes d'interface réseau et un identifiant de port cible, pour agréger les N ports logiques en un premier port, dans lequel le premier port est un port logique formé en agrégeant les N ports logiques correspondant aux N cartes d'interface réseau, et les N ports logiques sont configurés pour correspondre à l'identifiant de port cible, dans lequel le port logique correspondant à chaque carte d'interface réseau est un port logique formé en agrégeant les ports physiques de chaque carte d'interface réseau sur la base d'un protocole de commande d'agrégation de liens LACP ;
la réception, par une carte d'interface réseau cible, d'un paquet, dans lequel le paquet est un paquet envoyé par un commutateur physique connecté à la machine physique ou un paquet envoyé par une machine virtuelle cible, la machine virtuelle cible étant l'une quelconque des M machines virtuelles, et la carte d'interface réseau cible étant l'une des N cartes d'interface réseau ; et
dans lequel une table de flux comporte au moins un champ de correspondance et un champ d'exécution, dans lequel le champ de correspondance est utilisé pour réaliser une correspondance avec un paquet, et le champ d'exécution est utilisé pour indiquer une action à réaliser sur un paquet qui correspond à la table de flux, et dans lequel une table de flux stockée dans la carte d'interface réseau est une table de flux déchargée, et une table de flux générée par le commutateur virtuel par apprentissage de routage lent sur la base d'un paquet et d'un identifiant d'une fonction virtuelle est une table de flux de correspondance exacte,
lorsque la carte d'interface réseau cible constate, par interrogation, qu'aucune table de flux déchargée correspondant au paquet n'existe dans la carte d'interface réseau cible, l'envoi, par la carte d'interface réseau cible, d'un message au commutateur virtuel, dans lequel le message contient le paquet et un identifiant d'une fonction virtuelle utilisée par la carte d'interface réseau cible pour recevoir le paquet ; la détermination, par le commutateur virtuel, sur la base du paquet et de l'identifiant de la fonction virtuelle, la table de flux correspondant exactement au paquet ; et le déchargement, par le commutateur virtuel vers les N cartes d'interface réseau par le biais du premier port, la table de flux de correspondance exacte déterminée correspondant au paquet,
le traitement, par la carte d'interface réseau cible, du paquet sur la base de la table de flux de correspondance exacte déchargée.

2. Procédé selon la revendication 1, dans lequel le procédé comprend également :
lorsque la carte d'interface réseau cible constate, par interrogation, qu'une table de flux déchargée correspondant au paquet existe dans la carte d'interface réseau cible, le traitement, par la carte d'interface réseau cible, du paquet sur la base de la table de flux déchargée.

3. Procédé selon la revendication 1 ou 2, dans lequel avant la réception d'un message envoyé par une carte d'interface réseau cible, le procédé comprend également :
la réception (S702a), par le commutateur virtuel par le biais d'un second port, du paquet envoyé par une machine virtuelle cible, dans lequel la machine virtuelle cible est l'une quelconque des M machines virtuelles, et le second port est un port logique formé en agrégeant, dans le commutateur virtuel, N fonctions virtuelles correspondant aux N cartes d'interface réseau ;
la détermination (S702b), par le commutateur virtuel, d'une fonction virtuelle cible parmi les N fonctions virtuelles correspondant aux N cartes d'interface réseau ; et
l'envoi (S702c), par le commutateur virtuel, du paquet à la fonction virtuelle cible, afin que la carte d'interface réseau cible correspondant à la fonction virtuelle cible interroge, sur la base du paquet, s'il existe une table de flux déchargée correspondant au paquet.

4. Procédé selon l'une quelconque des revendications 1 à 3, dans lequel, avant le déchargement (S703), par le commutateur virtuel, une table de flux de correspondance exacte est transmise aux N cartes d'interface réseau par le biais du premier port, le procédé comprend également :
la détermination (S707), par le commutateur virtuel, que la table de flux de correspondance exacte satisfait à une condition de déchargement, dans lequel
la détermination que la table de flux de correspondance exacte satisfait à une condition de déchargement comprend :
la détermination, par le commutateur virtuel, sur la base d'un paquet correspondant à la table de flux de correspondance exacte, qu'une connexion entre une machine virtuelle envoyant le paquet et le commutateur virtuel est dans un état stable ; et/ou
la détermination, par le commutateur virtuel, sur la base d'un paquet correspondant à la table de flux de correspondance exacte, que le débit d'une machine virtuelle envoyant le paquet est supérieur ou égal à un seuil prédéfini.

5. Procédé selon l'une quelconque des revendications 1 à 4, dans lequel les tables de flux de correspondance exacte stockées dans le commutateur virtuel constituent un ensemble de tables de flux de correspondance exacte, les tables de flux déchargées stockées dans chacune des N cartes d'interface réseau constituent un ensemble de tables de flux déchargées, une table de flux déchargée comprise dans chaque ensemble de tables de flux déchargées est en correspondance un à un avec une table de flux de correspondance exacte comprise dans l'ensemble de tables de flux de correspondance exacte et qui satisfait à la condition de déchargement, et les N tables de flux déchargées qui se trouvent dans N ensembles de tables de flux déchargées et qui correspondent à une table de flux de correspondance exacte sont les mêmes.

6. Procédé selon la revendication 5, dans lequel le procédé comprend également :
lorsqu'il est détecté qu'une table de flux déchargée cible stockée dans une première carte d'interface réseau parmi les N cartes d'interface réseau est supprimée, l'envoi, par le commutateur virtuel, d'une instruction de suppression à une autre carte d'interface réseau différente de la première carte d'interface réseau parmi les N cartes d'interface réseau, dans lequel l'instruction de suppression ordonne de supprimer une table de flux déchargée stockée identique à la table de flux déchargée cible, la première carte d'interface réseau est l'une quelconque des N cartes d'interface réseau, et la table de flux déchargée cible est l'une quelconque de la pluralité de tables de flux déchargées stockées dans la première carte d'interface réseau.

7. Procédé selon la revendication 5 ou 6, dans lequel le procédé comprend également :
lorsqu'il est détecté qu'une condition prédéfinie est satisfaite, l'envoi, par le commutateur virtuel, d'une instruction de mise à jour aux N cartes d'interface réseau, dans lequel l'instruction de mise à jour ordonne aux N cartes d'interface réseau de mettre à jour une table de flux déchargée associée à un paquet cible, et la condition prédéfinie comprend l'un ou plusieurs des éléments suivants : une règle de routage lent correspondant aux modifications du paquet cible, une connexion pour les âges du paquet cible, un port d'une machine virtuelle est supprimé et l'état d'une connexion du protocole de commande de transmission TCP change.

8. Procédé selon l'une quelconque des revendications 5 à 7, dans lequel le procédé comprend également :
lorsqu'il est détecté qu'une seconde carte d'interface réseau parmi les N cartes d'interface réseau est dans un état anormal, l'annulation, par le commutateur virtuel, de l'agrégation entre un port logique correspondant à la seconde carte d'interface réseau et un port logique correspondant à une autre carte d'interface réseau différente de la seconde carte d'interface réseau parmi les N cartes d'interface réseau, dans lequel la seconde carte d'interface réseau est l'une quelconque des N cartes d'interface réseau ; et
l'envoi, par le commutateur virtuel, d'une instruction de marquage à la seconde carte d'interface réseau, et l'annulation, par le commutateur virtuel, d'une correspondance un à un entre une table de flux déchargée stockée dans la seconde carte d'interface réseau et une table de flux de correspondance exacte qui fait partie de l'ensemble de tables de flux de correspondance exacte et qui satisfait à la condition de déchargement, dans lequel l'instruction de marquage demande à la seconde carte d'interface réseau de marquer la table de flux déchargée stockée comme invalide.

9. Appareil de traitement de table de flux (900), conçu pour réaliser le procédé selon l'une quelconque des revendications 1 à 8.

10. Programme informatique, dans lequel le programme informatique comprend des instructions, et lorsque le programme informatique est exécuté par un ordinateur, l'ordinateur est activé pour réaliser le procédé selon l'une quelconque des revendications 1 à 8.
